# DEMANDE DE BREVET EUROPEEN

(11) **EP 4 494 761 A1**
(43) Date de publication de la demande: **22.01.2025**
(21) Numéro de dépôt: 24189116.7
(22) Date de dépôt: 17.07.2024
(51) Int. Cl.: B01J 47/024, H01M 8/04044

(54) **DÉIONISEUR POUR UN CIRCUIT DE FLUIDE, CIRCUIT DE FLUIDE COMPRENANT UN TEL DÉIONISEUR, PROCÉDÉ DE REMPLISSAGE D'UN DÉIONISEUR**

(30) Priorité: 21.07.2023 FR 2307879
(71) Demandeur: HUTCHINSON, 75008 Paris (FR)
(72) Inventeur: GILLET, Damien, 45220 CHATEAU-RENARD (FR); DONNET, Christophe, 45200 AMILLY (FR); ARNAULT, Nicolas, 77780 BOURRON-MARLOTTE (FR)
(74) Mandataire: Gevers & Orès

(57) **Abrégé**

L'invention concerne un déioniseur (1) pour un circuit (50) de fluide, le déioniseur comprenant une embase (2) de raccordement fluidique et une cartouche (8) comportant un corps (10) et un couvercle (20) destiné à être fixé au corps, le couvercle (20) comportant une plateforme (21) reliée à un puits central (25), la plateforme s'étend transversalement par rapport à un axe longitudinal (X) et ferme une cavité interne (16) du corps, le puits central s'étend à l'intérieur du corps (10) et comporte deux tronçons adjacents. Un tronçon supérieur (25a) comporte des seconds orifices (27a, 27b, 27c) recouverts par un second tamis ou comportant ce second tamis, les seconds orifices étant configurés pour laisser passer le fluide (F) depuis le puits central jusque dans la cavité interne, et le second tamis étant configuré pour retenir une résine (A) et l'empêcher de sortir de la cavité interne (16). Un tronçon inférieur (25b) est dépourvu d'orifices.

## Description

### Domaine technique de l'invention

L'invention a trait au domaine technique des filtres, en particulier des filtres ioniques ou déioniseurs. L'invention concerne également des circuits de fluide équipés de tels filtres.

Un déioniseur est un type particulier de filtre destiné à réguler le niveau de conductivité électrique d'un fluide. Ce niveau de conductivité est régulé par le contrôle du niveau d'ions dans le fluide. Le déioniseur peut donc être également appelé filtre ionique. La nature du fluide à filtrer n'est pas limitative dans le cadre de l'invention. Toutefois, comme cela sera vu plus en détail dans la suite de la présente description, le fluide est typiquement un liquide de refroidissement circulant dans un circuit de régulation de la température de piles à combustible, typiquement hydrogène.

L'invention a également trait au domaine technique des procédés de remplissage d'un filtre, par exemple un déioniseur.

### Arrière-plan technique

Une pile à combustible est destinée à générer une tension électrique au travers d'une réaction d'oxydo-réduction pour, par exemple, alimenter le moteur électrique d'un véhicule. Elle se présente sous la forme d'un empilement comprenant une cathode et une anode séparée de la cathode par une électrolyte, le combustible étant réduit par oxydation sur la cathode. Les systèmes de piles à combustible comprennent généralement un empilement de piles à combustible dans lequel chaque pile à combustible est traversée par un fluide de refroidissement. On parle de « circuit de régulation de la température » pour désigner la boucle de fluide et les éléments du système de piles à combustible qui sont traversés par le fluide de refroidissement et/ou qui participent au refroidissement des piles à combustible.

Les systèmes de piles à combustibles, notamment à hydrogène, sont très répandus dans les domaines de l'automobile et du transport, où de plus en plus de véhicules électriques sont alimentés au moyen de tels systèmes. Le déioniseur permet de garantir le maintien d'un niveau de conductivité du fluide faible dans le circuit de régulation de la température. À cet égard, le déioniseur comporte donc un lit granulaire à base d'une résine échangeuse d'ions.

Les déioniseurs existants comprennent typiquement un réservoir muni d'une cavité interne comportant un port d'entrée et un port de sortie par lesquels le fluide entre et sort respectivement de la cavité interne. La résine échangeuse d'ions occupe une partie du volume de la cavité interne et se situe sur le parcours du fluide ce qui lui permet de réguler le niveau de conductivité dudit fluide. De manière classique, les déioniseurs présentent une forme tubulaire ayant, à chacune de leurs extrémités, des moyens de raccordement au circuit. Les opérations de maintenance qui doivent être effectuées sur ces déioniseurs, par exemple pour changer la résine échangeuse d'ions, sont complexes et longues, sans parler de la difficulté liée à l'encombrement de ces déioniseurs. De plus, comme le déioniseur entraîne une perte de charge importante, une ligne dédiée au déioniseur est classiquement prévue dans le circuit de fluide. En outre, la problématique de la régulation de la conductivité du fluide se pose également dans les déioniseurs de l'art antérieur. Bien que la recirculation permanente permette de traiter la totalité du fluide, des architectures ont été proposées afin de mieux contrôler la distribution du fluide dans le déioniseur et ainsi assurer des échanges suffisants entre le fluide et la résine échangeuse d'ions. Toutefois la plupart des solutions existantes ne donnent pas entièrement satisfaction.

Le document US 10,569,266 A1 divulgue un déioniseur 5 pour un circuit 2 de refroidissement d'une pile à combustible. Le déioniseur 5 comprend une embase 8 destinée à être raccordée au circuit 2 de refroidissement. À cet égard, l'embase 8 comprend un conduit 9 pour la circulation du liquide de refroidissement et une portion 10 s'étendant perpendiculairement au conduit. Le conduit 9 est configuré pour être monté sur une conduite de dérivation 6 du circuit. Le déioniseur 5 comprend également une cartouche 15, en forme de cloche, configurée pour recevoir une résine 14 échangeuse d'ions. La cartouche 15 est adaptée pour être fixée de manière amovible sur la portion 10 perpendiculaire de l'embase. Dans une telle configuration, il est possible de dévisser la cartouche de la portion 10 perpendiculaire de l'embase lorsqu'une opération de maintenance doit être effectuée sur le déioniseur, ce qui simplifie nettement l'opération de maintenance.

En outre, la cartouche 15 comprend un corps cylindrique 15a et un puits central 16 en communication fluidique avec un orifice de sortie 12 du conduit de circulation du liquide de refroidissement. Le corps cylindrique 15a et le puits central 16 délimitent le volume destiné à recevoir la résine 14 échangeuse d'ions. Le liquide de refroidissement pénètre dans la cartouche 15 par l'intermédiaire d'un disque grillagé 31a situé au fond de la cartouche et rempli progressivement la cartouche 15. Il atteint ensuite l'intérieur du puits central par l'extrémité supérieure du puits central et ressort par l'orifice de sortie 12 et sort de la cartouche en s'écoulant par le puits central 16 jusqu'à l'orifice de sortie 12.

Toutefois, le liquide de refroidissement est également en mesure de sortir de la cartouche 15 en empruntant une voie de dérivation 32 sans passer par la résine 14 échangeuse d'ions. Ce système est d'une grande complexité et ne permet pas de contrôler précisément le temps de résidence du fluide dans le corps cylindrique 15a, notamment au contact de la résine échangeuse d'ions. En effet, ce temps de résidence dépend non seulement du débit de fluide dans la cartouche mais aussi du nombre et de la section de passage des trous du disque grillagé 31a, de la longueur de puits central 16, notamment de la distance entre les trous du disque grillagé 31a et l'extrémité supérieure du puits central, de la section de passage de la voie de dérivation 32. Ainsi, si une autre application et/ou un changement d'échelle sont envisagés, un redimensionnement complet du système doit être effectué.

Le document KR 1261950 B1 divulgue un déioniseur pour un circuit de refroidissement d'une pile à combustible. Le déioniseur comprend un corps 10, un couvercle 20 comportant un conduit de sortie de l'eau de refroidissement et une embase 14 comportant un conduit d'entrée pour l'eau de refroidissement. Le corps 10 est fixé au couvercle 20 par des moyens de fixation 11, 23, 30, et fixé à l'embase 14 par des moyens de couplage 167. Il renferme une cartouche 16 amovible couplée à l'embase 14 par des moyens de fixation 1651. La cartouche 16 comprend une paroi cylindrique 161 comportant un maillage et un puits central 163, installé à l'intérieur de la paroi cylindrique 161, par lequel pénètre l'eau de refroidisement venant du conduit d'entrée 12. La résine échangeuse d'ions est destinée à occuper le volume compris entre la paroi cylindrique 161 et le puits central 163. Le puits central 163 comprend également un maillage formé d'une pluralité d'ouvertures s'étendant le long du puits central 163. Le diamètre des ouvertures augmente à mesure que l'on s'éloigne de la zone par laquelle l'eau de refroidissement est injectée à l'intérieur de la cartouche. L'intérêt d'un tel agencement n'est pas expliqué.

Ce dispositif ne permet pas de contrôler avec précision le temps de résidence du fluide dans le déioniseur, notamment au contact de la résine échangeuse d'ions. En effet, les ouvertures réalisées au niveau du puits central s'étendent sur toute la longueur du puits central, si bien que lorsque le fluide traverse les ouvertures les plus proches de l'extrémité inférieure du puits, il ne reste pas en contact suffisamment longtemps avec la résine échangeuse d'ions et sort presque directement du déioniseur. De plus, cela affecte le débit de fluide au niveau des ouvertures les plus éloignées, si bien que si une autre application et/ou un changement d'échelle sont envisagés, un redimensionnement complet des ouvertures du puits central doit être effectué pour conserver une distribution appropriée du fluide dans le déioniseur.

Si, comme décrit jusqu'à présent, une régulation appropriée du niveau de conductivité des fluides peut poser des difficultés lors de la conception des déioniseurs, en particulier lorsque les industriels cherchent à implémenter ces dispositifs sur des circuits de dimensions variables, le remplissage de ces déioniseurs peut également soulever de nombreuses problématiques. Ceci étant dit, les problématiques liées au remplissage ne concernent pas uniquement les déioniseurs mais également tous les filtres.

À ce propos, l'art antérieur s'est aussi intéressé au remplissage de filtres à cartouche. Un filtre à cartouche est un filtre comprenant une embase de raccordement fluidique apte à être raccordée au circuit de fluide et une cartouche apte à être fixée de manière amovible sur l'embase. Les documents précités décrivent des exemples de filtres à cartouche, notamment de déioniseurs à cartouche. Ce type de filtre doit être distingué des filtres fixes dont l'armature extérieure est généralement faite d'une seule pièce et dans lesquels il n'est donc pas possible de séparer une cartouche d'une embase. Dans les filtres à cartouche, la cartouche étant amovible, il est possible d'effectuer le remplissage de la cartouche sans avoir à démonter l'embase du circuit de fluide.

Le document JP-A-2021137771 divulgue un procédé de remplissage d'une cartouche 5 d'un filtre type déioniseur. La cartouche 5 est adaptée pour être fixée de manière amovible dans un boîtier 4 prévu à cet effet. La cartouche 5 comprend un puits central 6 avec lequel elle forme une pièce solidaire. Elle comprend en outre deux éléments grillagés 7a et 8a qui permettent de retenir la résine échangeuse d'ions lorsque cette dernière est dans la cartouche. Le procédé de remplissage de la cartouche est réalisé au moyen d'un appareil de remplissage. Le procédé comprend une étape au cours de laquelle la cartouche 5, dépourvue de l'élément grillagé 8a, est disposée sur un support 30 de sorte à ce que son sommet soit tourné vers le sol. Ensuite, un élément masquant 13 est disposé sur une extrémité du puits central tournée vers l'appareil de remplissage de sorte à obturer ladite extrémité, puis la cartouche 5 est remplie de résine échangeuse d'ions au moyen d'un robinet 35. Enfin, la cartouche 5 est fermée en plaçant l'élément grillagé 8a sur des supports 9 prévus à cet effet.

Ce procédé de remplissage est très complexe. En effet, le remplissage de la cartouche ne peut s'effectuer que par le fond de la cartouche, c'est-à-dire par la bordure formée par l'élément grillagé 8a et un couvercle 8 lorsqu'ils sont présents. Effectivement, pour effectuer le remplissage, l'élément grillagé 8a et le couvercle 8 de la cartouche doivent être retirés afin de laisser l'intérieur de la cartouche libre d'accès. Concomitamment, il faut faire en sorte que l'orifice d'entrée du puits central 6 ne soit pas accessible et pour cela le puits central doit être recouvert avec un élément masquant 13. Après le remplissage de la cartouche 5, cette dernière est refermée avec l'élément grillagé 8a et le couvercle 8, ce qui requiert une très grande précision car il faut ajuster l'élément grillagé 8a et le couvercle 8 autour du puits central.

Les documents US 2009/233134 A1, US 5 707 536 A et EP 3 132 837 A1 divulguent des déioniseurs pour un circuit de fluide.

L'invention vise à surmonter au moins une partie des problèmes précités.

### Résumé de l'invention

Selon un premier aspect, l'invention propose à cet effet un déioniseur pour un circuit de fluide, le déioniseur comprenant :
- une embase de raccordement fluidique apte à être raccordée à un circuit de fluide, cette embase comportant un port d'entrée de fluide, un port de sortie de fluide, et une interface de fixation, et
- une cartouche comportant un corps et un couvercle, le corps ayant une forme générale tubulaire le long d'un axe longitudinal, et comprenant une première extrémité longitudinale fermée et une seconde extrémité longitudinale qui est configurée pour être fixée à l'interface de fixation de l'embase, le corps comportant une cavité interne de stockage apte à stocker une résine échangeuse d'ions, le couvercle étant destiné à être fixé à la seconde extrémité longitudinale du corps et comportant une plateforme reliée à un puits central,

la plateforme s'étendant transversalement par rapport audit axe longitudinal et fermant la seconde extrémité du corps et ladite cavité interne, cette plateforme comportant des premiers orifices recouverts par un premier tamis ou comportant ce premier tamis, les premiers orifices étant configurés pour laisser passer un fluide depuis ladite cavité interne vers le port de sortie, et le premier tamis étant configuré pour retenir la résine et l'empêcher de sortir de la cavité interne, et
le puits central s'étendant à l'intérieur du corps et ayant une forme générale tubulaire le long de l'axe longitudinal, le puits central comportant une première extrémité longitudinale fermée située du côté de la première extrémité longitudinale du corps, et une seconde extrémité longitudinale qui est reliée à la plateforme et qui est raccordée fluidiquement au port d'entrée, le puits central comportant deux tronçons adjacents entre ses première et seconde extrémités, un tronçon supérieur situé du côté de la première extrémité et comportant des seconds orifices recouverts par un second tamis ou comportant ce second tamis, les seconds orifices étant configurés pour laisser passer le fluide depuis le puits central jusque dans la cavité interne, et le second tamis étant configuré pour retenir la résine et l'empêcher de sortir de la cavité interne, et un tronçon inférieur qui est situé du côté de la seconde extrémité et qui est dépourvu d'orifices.

Le déioniseur selon l'invention résout au moins une partie des problèmes de l'art antérieur. En effet, contrairement aux déioniseurs de l'art antérieur, le déioniseur selon l'invention permet d'assurer que le temps de résidence du fluide dans le déioniseur est suffisant pour obtenir un niveau de conductivité faible dans le fluide. À cet égard, dans le déioniseur de l'invention, il n'existe des seconds orifices qu'au niveau du tronçon supérieur du puits central, c'est-à-dire le tronçon situé du côté de la première extrémité. Le tronçon inférieur du puits central situé du côté de la seconde extrémité, à savoir l'extrémité du puits central qui est raccordée fluidiquement au port d'entrée, est dépourvu d'orifices. Ainsi, lorsque le fluide pénètre dans le déioniseur, il ne peut pas directement pénétrer dans la cavité interne et ressortir par les premiers orifices en ayant traversé la résine échangeuse d'ions que sur une partie infime de sa hauteur. Au contraire, le fluide est contraint d'atteindre les seconds orifices du tronçon supérieur, situé du côté de la première extrémité, pour passer du puits central jusque dans la cavité interne. Incidemment, le fluide est contraint de traverser la résine échangeuse d'ions sur la quasi-totalité de sa hauteur avant de ressortir du déioniseur par le port de sortie en passant par les premiers orifices. Un temps de résidence du fluide dans la cavité interne est garanti en comparaison du temps de résidence obtenu dans les déioniseurs de l'art antérieur ce qui permet d'assurer des échanges suffisants avec la résine échangeuse d'ions et, subséquemment, de maintenir un faible niveau de conductivité dans le fluide.

En outre, contrairement aux déioniseurs de l'art antérieur, le maintien du niveau de conductivité du fluide à un niveau faible peut être facilement adapté selon les dimensions du déioniseur selon l'invention et/ou du volume de fluide à traiter, ceci sur la base d'un nombre limité de paramètres géométriques du déioniseur. En effet, le temps de résidence du fluide dans la cavité interne est peu dépendant du débit du fluide et peu dépendant des caractéristiques de la plateforme, notamment des dimensions et/ou de la forme des premiers orifices de la plateforme. Au contraire, dans les déioniseurs de l'art antérieur, ces paramètres impactent beaucoup le temps de résidence du fluide dans la cavité interne. En effet, comme il y a des seconds orifices proches du port de sortie de ces déioniseurs, cela a pour effet de rendre le temps de résidence du fluide sortant par ces orifices très dépendant des paramètres du fluide entrant dans le déioniseur et très dépendant des paramètres géométriques en sortie du déioniseur, notamment des orifices de sortie de la cavité interne.

Selon différentes caractéristiques de ce déioniseur selon ce premier aspect de l'invention qui pourront être prises ensemble ou séparément :
- les seconds orifices ont des diamètres croissants le long de l'axe longitudinal, les seconds orifices ayant les diamètres les plus élevés étant proximaux de la première extrémité tandis que les seconds orifices ayant les diamètres les plus faibles étant distaux de la première extrémité ;
- les seconds orifices présentent des dimensions, selon l'axe longitudinal, ne différant pas de plus de 1 0% par rapport aux dimensions, selon un axe transversal, du puits central et du port d'entrée ;
- les seconds orifices présentent des dimensions centimétriques le long de l'axe longitudinal ;
- les seconds orifices présentent des dimensions centimétriques ;
- les seconds orifices sont répartis angulairement sur une circonférence du puits central ;
- lesdits seconds orifices présentent une forme sensiblement ellipsoïdale ;
- les dimensions longitudinales du tronçon inférieur sont au moins égales aux dimensions longitudinales du tronçon supérieur ;
- les premiers orifices sont distribués uniformément autour du puits central, lesdits premiers orifices ayant sensiblement le même diamètre ou la même dimension transversale ;
- le puits central comprend entre quatre et dix premiers orifices ;
- lesdits premiers orifices sont de forme sensiblement circulaire ;
- la plateforme comprend une face supérieure, de forme circulaire, délimitée par un pourtour périphérique s'étendant autour de l'axe longitudinal, ce pourtour périphérique présentant une forme cylindrique épousant un pourtour intérieur de la seconde extrémité longitudinale de la cartouche, lesdits premiers orifices étant formés dans la face supérieure ;
- le déioniseur comprend en outre une cavité d'évacuation formée par la plateforme et l'embase, ladite cavité d'évacuation s'étendant autour du port d'entrée ;
- le port d'entrée comprend un canal de raccordement du port d'entrée au puits central, le canal de raccordement étant sensiblement droit et débouchant au niveau de la seconde extrémité longitudinale du puits central ;
- l'embase comprend une vanne multivoie de raccordement du déioniseur au circuit de fluide ;
- le corps comprend un dôme, situé au niveau de sa première extrémité, ce dôme étant configuré pour recevoir la première extrémité du puits central ;
- le corps comprend en outre un trou de purge d'air et un bouchon configuré pour être fixé au trou de purge d'air, le trou de purge d'air et le bouchon étant situés à un sommet du dôme ;
- la seconde extrémité du corps comprend des premiers moyens de fixation, et l'interface de fixation comprend des seconds moyens de fixation complémentaires des premiers moyens de fixation et aptes à coopérer avec lesdits premiers moyens de fixation ;
- la plateforme comprend des premiers moyens d'accroche à la cartouche, et la seconde extrémité du corps comprend et des seconds moyens d'accroche à la plateforme ;
- la seconde extrémité du corps comprend des ouvertures de chargement de la résine échangeuse d'ions, le couvercle étant configuré pour se déplacer entre une position de remplissage, dans laquelle les moyens d'accroche sont libres et les ouvertures sont ouvertes de sorte à donner accès à la cavité interne pour le remplissage, et une position d'utilisation, dans laquelle les seconds moyens d'accroche sont en prise avec les premiers moyens d'accroche et les ouvertures sont fermées par la plateforme, par translation d'axe longitudinal ;
- la plateforme et le puits central sont formés d'une seule pièce ;
- la plateforme et le puits central sont des pièces distinctes ;
- les seconds orifices forment des rangées annulaires de seconds orifices sur la circonférence du puits central ;
- les seconds orifices d'une même rangée annulaire sont angulairement espacés d'un angle de 90° ;
- les seconds orifices d'une même rangée annulaire sont angulairement espacés d'un angle de 180°.

Encore selon le premier aspect, l'invention concerne en outre un circuit de fluide, en particulier pour un véhicule, comprenant un empilement de piles à combustible, un échangeur de chaleur et un déioniseur tel que précédemment décrit.

Toujours selon le premier aspect, l'invention concerne également un procédé de remplissage d'un déioniseur, le procédé comprenant les étapes suivantes dans cet ordre :
- fournir une cartouche et un couvercle d'un déioniseur tel que précédemment décrit,
- mettre le couvercle dans une position de remplissage,
- remplir la cavité interne de résine échangeuse d'ions, et
- fermer la cartouche au moyen du couvercle.

Avantageusement, la fermeture de la cartouche provoque un tassement voire une compression de la résine dans la cavité interne.

Selon un deuxième aspect, l'invention concerne un filtre pour un circuit de fluide, le filtre comprenant une cartouche comportant un corps et un couvercle comportant une plateforme, le corps ayant une forme générale tubulaire le long d'un axe longitudinal, et comprenant une première extrémité longitudinale fermée et une seconde extrémité longitudinale qui est configurée pour être fixée au couvercle, le corps comportant une cavité interne de stockage apte à stocker une résine filtrante, la seconde extrémité longitudinale du corps comprenant des ouvertures latérales de chargement de la résine filtrante, le couvercle étant configuré pour se déplacer en translation le long de l'axe longitudinal depuis une position de remplissage, dans laquelle les ouvertures latérales sont ouvertes de sorte à permettre le remplissage de la cavité interne, vers une position d'utilisation, dans laquelle les ouvertures sont fermées par la plateforme.

Le filtre selon le second aspect de l'invention permet non seulement de remplir aisément la cavité interne mais en outre, de subséquemment monter le couvercle 20 par un simple appui de l'utilisateur sur celui-ci. Au contraire, dans les filtres selon l'art antérieur, le chargement/remplissage de la cavité interne ne peut se faire que par le fond de la cavité interne, comme ceci a été vu à titre d'exemple dans le document JP-A-2021137771. Le filtre est donc particulièrement simple d'utilisation. La position des ouvertures, à savoir latéralement au niveau de la seconde extrémité longitudinale du corps est donc particulièrement adaptée pour que le remplissage puisse être effectué simplement et sans avoir à effectuer des manipulations complexes et nombreuses pour monter ou remonter le couvercle.

Selon différentes caractéristiques de ce filtre selon ce deuxième aspect de l'invention qui pourront être prises ensemble ou séparément :
- la plateforme est reliée à un puits central ayant une forme générale tubulaire le long de l'axe longitudinal, ce puits central s'étendant à l'intérieur du corps ;
- ledit filtre est un déioniseur ;
- des premières encoches s'étendent depuis un premier rebord annulaire sur une surface interne du corps ;
- la cartouche comprend deux ouvertures diamétralement opposées.

Le filtre selon l'invention peut comprendre une ou plusieurs des caractéristiques listées ci-dessus concernant le déioniseur.

Toujours selon le deuxième aspect, l'invention concerne un procédé de remplissage d'un filtre, le procédé comprenant les étapes suivantes dans cet ordre :
- fournir un filtre tel que précédemment décrit,
- mettre le couvercle dans la position de remplissage,
- remplir la cavité interne de la résine filtrante par l'intermédiaire des ouvertures latérales, et
- fermer la cartouche au moyen du couvercle.

Selon différentes caractéristiques de ce procédé de remplissage selon le deuxième aspect de l'invention qui pourront être prises ensemble ou séparément :
- la plateforme comporte des premiers moyens d'accroche à la cartouche et la seconde extrémité du corps comporte des seconds moyens d'accroche à la plateforme, les premiers et seconds moyens d'accroche étant libres lorsque le couvercle est en position de remplissage, les seconds moyens d'accroche étant en prise avec les premiers moyens d'accroche lorsque le couvercle est en position d'utilisation ;
- l'un des éléments choisis parmi les premiers moyens d'accroche et les seconds moyens d'accroche comprend des protubérances, et l'autre de ces éléments comprend des encoches, les protubérances étant configurées pour coopérer par encliquetage élastique avec les encoches pour assurer la fixation des éléments entre eux ;
- des premières protubérances sont respectivement séparées des deuxièmes protubérances par des premiers espaces, les moyens d'accroche comprenant des pattes aptes à s'insérer dans les espaces de sorte à verrouiller longitudinalement le couvercle par rapport au corps lorsque le couvercle est en position d'utilisation ;
- le couvercle comprend au moins un motif de repérage de la position de remplissage et de la position d'utilisation, ce motif étant agencé de sorte que, dans la position de remplissage, le motif est entièrement visible, et dans la position d'utilisation, le motif est partiellement visible ;
- la plateforme comprend un deuxième rebord annulaire en saillie depuis une surface externe de la plateforme de sorte que dans la position de remplissage, le deuxième rebord annulaire est en butée pour le premier rebord annulaire.

### Brève description des figures

D'autres objets, caractéristiques et avantages de l'invention apparaîtront plus clairement dans la description qui suit, faite en référence aux figures annexées, dans lesquelles :
- les figures 1a et 1b illustrent des circuits de fluide respectivement selon un premier (Fig. 1a) et un deuxième (Fg. 1b) mode de réalisation de l'invention,
- les figures 2a et 2b sont des vues en perspective d'un déioniseur selon un premier mode de réalisation de l'invention en position assemblée (Fig. 2a) et en position désassemblée (Fig. 2b),
- les figures 3a et 3b sont des vues en perspective d'un déioniseur selon un deuxième mode de réalisation de l'invention en position assemblée (Fig. 3a) et en position désassemblée (Fig. 3b),
- les figures 4a et 4b sont des vues en coupe longitudinale d'un déioniseur selon un mode de réalisation de l'invention,
- la figure 4c est une vue de dessus d'un couvercle pour un déioniseur tel qu'illustré aux figures 4a et 4b,
- les figures 5a à 5c sont respectivement des vues en perspective et en coupe d'une cartouche de déioniseur selon le premier mode de réalisation aux différentes étapes d'un procédé de remplissage de la cartouche,
- la figure 6 illustre les différentes étapes de mise en oeuvre d'un procédé de remplissage de la cartouche d'un déioniseur selon un mode de réalisation de l'invention,
- la figure 7 est une vue en perspective de deux plateformes de déioniseur selon des modes de réalisation de l'invention,
- la figure 8 est une vue en perspective de deux puits centraux de déioniseur selon des modes de réalisation de l'invention,
- la figure 9 est une vue en coupe d'une cartouche de déioniseur selon un mode de réalisation de l'invention.

### Description détaillée de l'invention

Dans la présente description, les termes « supérieur(e)(s) », « inférieur(e)(s) » n'ont pas de caractère limitatif et servent simplement à mieux comprendre l'invention en référence aux figures illustrées. L'utilisation du terme « inférieur » indique simplement que l'élément considéré est plus proche d'une bordure inférieure du filtre en comparaison d'un élément auquel est associé le terme « supérieur », la bordure inférieure étant celle la plus proche des ports du filtre sur les figures illustrées.

Nous allons maintenant décrire l'invention en référence aux figures annexées.

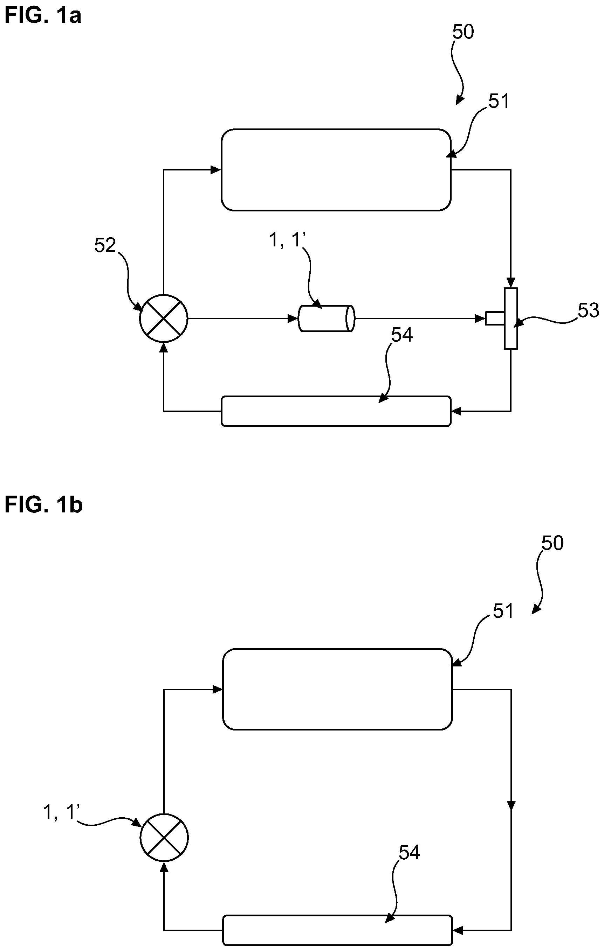

Les figures 1a et 1b illustrent des circuits de fluide 50 selon un mode de réalisation de l'invention. Dans les exemples de réalisation illustrés, le circuit de fluide 50 est un circuit de refroidissement pour des véhicules, par exemple automobiles, alimentés au moyen d'un empilement de piles à combustible. À cet égard, les circuits de fluide 50 illustrés comprennent basiquement un empilement 51 de piles à combustible, un échangeur de chaleur 54 et un filtre 1'. Les flèches schématisées sur le circuit de fluide 50 désignent le sens de circulation du fluide F au sein du circuit de fluide 50.

Le fonctionnement de l'empilement 51 de piles à combustible a été présenté en introduction et n'est pas rappelé ici. En plus, comme déjà mentionné, on pourrait avoir tout autre type de circuit de fluide 50. L'échangeur de chaleur 54 a quant à lui, pour rôle de réaliser des échanges de chaleur avec le fluide F de refroidissement, après que ce dernier a traversé l'empilement 51, et de distribuer la chaleur absorbée par ledit fluide F de refroidissement dans le reste du véhicule essentiellement aux fins du chauffage et/ou de la climatisation et/ou de la déshumidification de l'air de l'habitacle. Lorsqu'il traverse l'empilement 51, le fluide F de refroidissement se charge en ions et il est nécessaire d'en réguler la conductivité pour éviter une dégradation prématurée du circuit de fluide 50. C'est le filtre 1' qui est, selon un premier aspect de l'invention, un déioniseur qui assure ce contrôle de la conductivité.

Dans le mode de réalisation illustré à la figure 1a, les éléments du circuit de fluide 50 sont montés en parallèle. Le circuit de fluide comprend, en plus des éléments déjà mentionnés, une vanne 52 et un connecteur 53 classique en T. Le circuit de fluide 50 comprend une première branche comportant l'échangeur de chaleur 54 et une deuxième branche, parallèle à la première branche, comportant le déioniseur 1. Le connecteur 53 en T permet de distribuer le fluide F de refroidissement sortant de l'empilement 51 et du déioniseur vers l'échangeur 54 tandis que la vanne 52 permet de distribuer le fluide F de refroidissement sortant de l'échangeur 54 vers l'empilement 51 et le déioniseur 1. Ainsi, le processus par lequel le refroidissement est effectué dans le circuit est indépendant du processus par lequel la conductivité du fluide F de refroidissement est régulée. Dans ces conditions, si une intervention doit être mise en oeuvre sur le déioniseur 1, la boucle de refroidissement du fluide F de refroidissement n'est pas affectée. De même, si une intervention doit être réalisée sur l'échangeur 54, la boucle de régulation de la conductivité du fluide F de refroidissement n'est pas affectée.

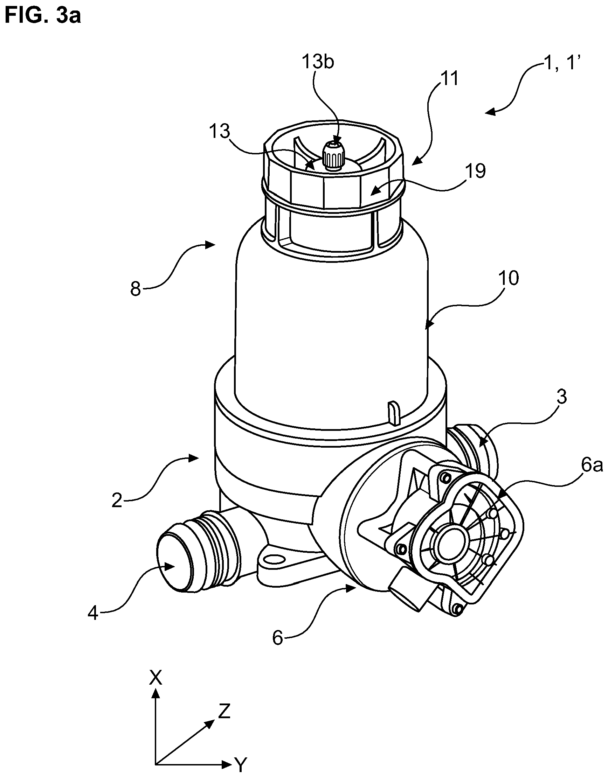

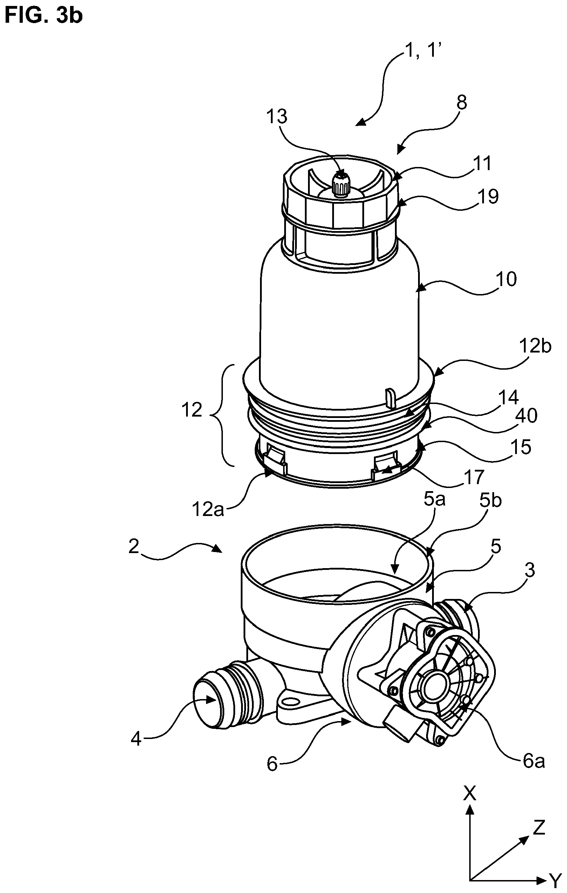

Cependant, ce circuit de fluide 50 (Fig. 1a) est plus complexe à fabriquer et requiert un plus grand nombre d'éléments. Ainsi, dans le mode de réalisation illustré à la figure 1b, les éléments du circuit de fluide 50 sont montés en série. On y retrouve l'empilement 52, l'échangeur 54 et le déioniseur 1. Dans ce circuit de fluide 50, le déioniseur 1 est équipé d'une vanne multivoie 6 qui lui permet de gérer lui-même la distribution du fluide F de refroidissement dans le circuit. Nous y reviendrons dans la description relative aux figures 3a et 3b. L'avantage d'une telle configuration est de permettre que le circuit et sa fabrication soient simplifiés, ce qui est rendu possible car il n'y a plus de vanne 52 isolée, de branches parallèles, et de connecteur 53 en T.

De tels circuits de fluide 50 sont utilisés pour mieux comprendre l'invention, toutefois, le circuit de fluide 50 selon l'invention n'est pas limité à un circuit de refroidissement 50 pour véhicules automobiles, et encore moins un circuit de refroidissement 50 comprenant un empilement de piles à combustible. En effet, le circuit de fluide 50 selon l'invention trouve application dans tous les domaines nécessitant une filtration au moyen d'un filtre 1' selon l'invention. En ce qui concerne le déioniseur 1 qui sera plus particulièrement décrit dans la suite et qui constitue un premier aspect de l'invention, il convient de noter qu'il peut, à titre d'exemple, être utilisé dans n'importe quel circuit de fluide 50 nécessitant une régulation de la conductivité d'un fluide. Le circuit de fluide 50 peut donc être tout circuit de déionisation d'une eau, que cette eau soit destinée à un usage en laboratoire, à un usage industriel ou à la grande consommation.

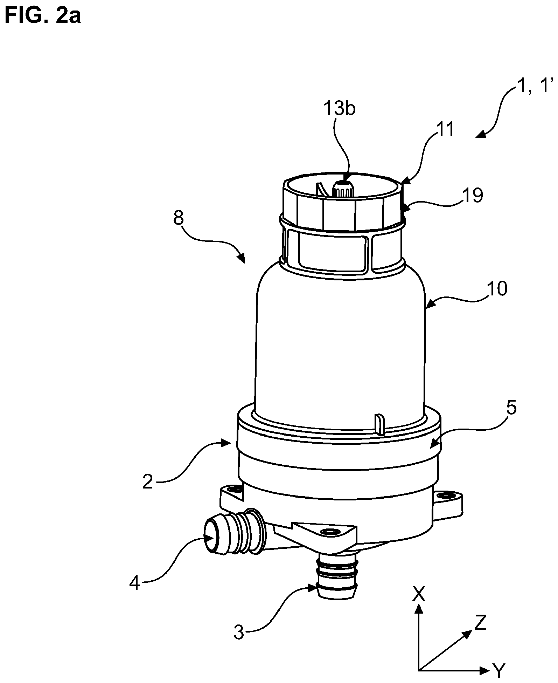

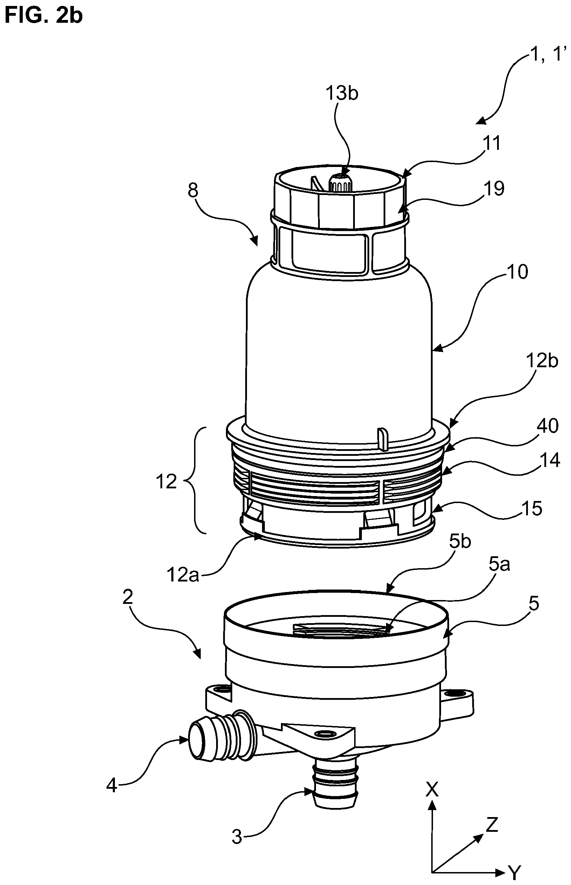

Les figures 2a et 2b illustrent un déioniseur 1 selon un premier mode de réalisation de la présente invention apte à être utilisé dans un circuit de fluide 50 destiné à réguler la conductivité d'un fluide, tels que par exemple ceux vus aux figures. 1a et 1b. Le déioniseur 1 est un déioniseur à cartouche, c'est-à-dire un déioniseur comprenant une embase 2 de raccordement fluidique apte à être raccordée au circuit de fluide 50 et une cartouche 8 apte à être fixée de manière amovible sur l'embase 2. Lorsqu'une intervention doit être réalisée sur le déioniseur 1, la cartouche 8 peut être retirée de l'embase 2 sans avoir à démonter tout le déioniseur 1, c'est-à-dire le déioniseur avec l'embase 2. Incidemment, l'embase 2 peut être installée à demeure dans le circuit de fluide 50.

À cet égard, l'embase 2 présente une forme générale tubulaire le long d'un axe longitudinal X. Elle comprend un port d'entrée 3 de fluide et un port de sortie 4 de fluide permettant au fluide F de, respectivement, pénétrer dans le déioniseur 1 et sortir du déioniseur 1. Il convient de noter que le port d'entrée 3 et le port de sortie 4 pourraient tout à fait être situés sur la cartouche 8 au lieu d'être situés au niveau de l'embase 2. Toutefois, dans ce cas, il n'y aurait plus aucun intérêt à utiliser une cartouche 8 distincte d'une embase 2 et qui peut être détachée de cette embase, pour les raisons déjà évoquées. Dans ce cas, il ne s'agirait plus d'un déioniseur 1 à cartouche mais d'un déioniseur 1 fixe.

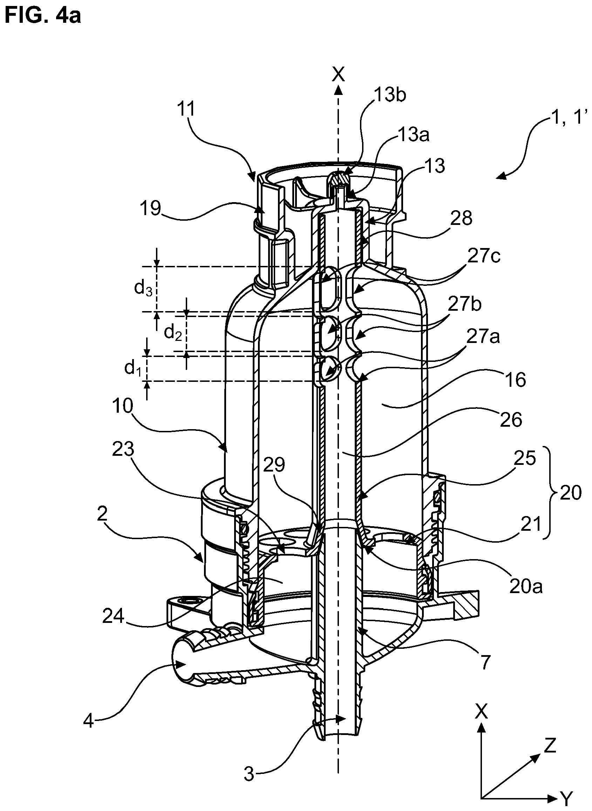

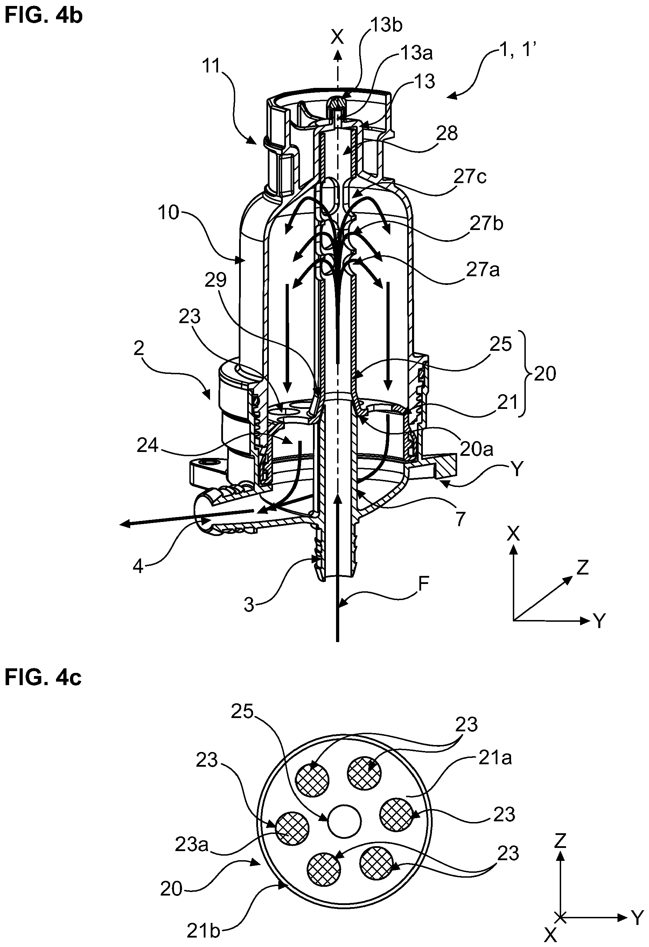

Revenons au circuit de fluide 50 exemplifié à la figure 1a. Le déioniseur 1 pourrait y être implémenté en reliant fluidiquement le port d'entrée 3 à la vanne 52 et en reliant fluidiquement le port de sortie 4 au connecteur 53 en T. Si le déioniseur 1 comprend une vanne multivoie 6 intégrée, comme illustré aux figures 4a et 4b, il peut être installé dans le circuit de fluide 50 en reliant le port d'entrée 3 à l'échangeur 54 et en reliant le port de sortie à l'empilement 51. Nous y reviendrons dans la suite. Ceci étant dit, comme déjà mentionné, le déioniseur 1 peut être installé sur n'importe quel autre circuit de régulation de la conductivité. L'embase 2 comprend en outre une interface 5 de fixation à laquelle la cartouche 8 peut être fixée. Cette interface 5 de fixation, qui se situe à proximité d'une bordure supérieure de l'embase, sera mieux décrite dans la suite.

Les figures 3a et 3b illustrent un déioniseur 1 selon un deuxième mode de réalisation de la présente invention apte à être utilisé dans un circuit de fluide 50 destiné à réguler la conductivité d'un fluide. Contrairement au déioniseur 1 du premier mode de réalisation, ce déioniseur 1 comprend une vanne multivoie 6 permettant notamment de gérer la distribution du fluide F au travers de la cartouche 8 tout en garantissant une continuité de la circulation du fluide au sein du circuit de fluide 50. En outre, lors des opérations de maintenance pour le remplacement de la cartouche 8, la vanne multivoie 6 permet une fermeture de l'alimentation en fluide F vers la cartouche 8 évitant ainsi une purge complète du circuit de fluide 50. Incidemment, l'intégration de la vanne multivoie 6 à l'embase permet de supprimer les tuyaux, connexions et les éléments de la deuxième branche parallèle. Dans l'exemple de réalisation illustré sur la figure 1a, il s'agit notamment de la vanne 52, des tuyaux de la deuxième branche parallèle, et du connecteur 53 en T.

Dans le mode de réalisation illustré aux figures 3a et 3b, la vanne multivoie 6 est intégrée à l'embase 2 du déioniseur. Plus précisément, la vanne multivoie 6 est fixée sur une paroi de l'embase 2. Elle comprend un mécanisme d'entraînement (non visible), et un actionneur 6a qui permet de contrôler le mécanisme d'entraînement afin d'ouvrir ou de fermer, en cas de besoin, le chemin d'accès au déioniseur 1. À cet égard, le mécanisme d'entraînement est relié à une soupape (non visible) qui est apte à se déplacer pour sélectivement ouvrir et fermer un chemin d'accès reliant le port d'entrée 3 et le port de sortie 4. De préférence, la vanne multivoie 6, le port d'entrée 3 et le port de sortie 4 sont donc agencés selon une configuration en T, ce qui permet de simplifier l'ouverture et la fermeture du chemin d'accès. Nous y reviendrons dans la suite afin de mieux décrire l'agencement de ces éléments par rapport aux éléments internes du déioniseur 1.

Sauf indication contraire, toute la description qui suit s'applique indifféremment aux déioniseurs, par exemple selon les deux modes de réalisation précédemment décrits.

La cartouche 8 comporte un corps 10 et un couvercle 20 (visible Figs. 4a et 4b). Le corps 10 présente une forme générale tubulaire le long de l'axe longitudinal X. Le corps 10 comprend une première extrémité 11 longitudinale fermée et une seconde extrémité 12 longitudinale qui est configurée pour être fixée à l'interface 5 de fixation de l'embase. Comme la première extrémité 11 longitudinale est fermée, le fluide F qui pénètre dans le déioniseur 1 ne peut en ressortir qu'en empruntant un chemin menant jusqu'au port de sortie 4. La seconde extrémité 12 longitudinale peut avantageusement comprendre des premiers moyens 14 de fixation aptes à coopérer avec des seconds moyens 5a de fixation complémentaires de l'interface 5 de fixation afin de monter la cartouche 8 sur l'embase 2 de manière amovible.

Dans l'exemple de réalisation illustré sur les figures, les premiers moyens 14 de fixation consistent en un filetage, par exemple de forme hélicoïdale, formé sur une surface externe de la cartouche 8 tandis que les seconds moyens 5a consistent en un filetage complémentaire formé sur une surface intérieure de l'embase 2. Cela permet de monter et démonter la cartouche 8 de l'embase 2 par, respectivement, vissage et dévissage. Le montage et le démontage de la cartouche sont donc grandement facilité. Le déioniseur 1 selon l'invention n'est pas limité à de tels moyens de fixation et d'autres moyens de fixation permettant de monter la cartouche 8 de manière amovible sur l'embase 2 peuvent être envisagés par l'homme du métier sans préjudice pour l'invention.

À ce propos, comme cela peut être mieux vu sur les figures 2b et 3b, le déioniseur 1 peut également comprendre un joint 40 d'étanchéité permettant d'assurer son étanchéité au niveau de l'interface de fixation 5. La seconde extrémité 12 longitudinale comprend une butée annulaire 12b à proximité de laquelle le joint 40 d'étanchéité est positionné. L'interface de fixation comprend, quant à elle, une bordure supérieure 5b amenée à venir en appui étanche contre la butée annulaire 12b lorsque la cartouche 8 est montée sur l'embase 2, ledit appui étant étanchéifié par le joint 40.

En outre, comme visible sur les Fig. 2a à 3b, la première extrémité longitudinale 11 peut avantageusement comprendre un profil 19 de forme polyédrique qui est configuré pour être préhensible par un outil approprié. Les dimensions et la forme du profil 19 peuvent être adaptées à des outils standards ou, en alternative, si les dimensions et la forme du profil 19 ne sont pas adaptés à ceux des outils standards, l'outil peut être adapté pour un tel usage.

Le corps 10 comprend, en outre, une cavité interne 16 de stockage apte stocker une résine A échangeuse d'ions. La résine A échangeuse d'ions est une matière active avec laquelle le fluide F peut réaliser des échanges ioniques permettant de réguler sa conductivité. La résine A échangeuse d'ions se présente avantageusement sous forme de billes ou de grains, de diamètre généralement compris entre 0,2 mm et 2 mm. De préférence, la résine A est faite en copolymère aléatoire de polypropylène (PPR, « *polypropylene random copolymer »* en anglais), en polysulfure de phénylène (PPS, *« polyphenylene sulfide »* en anglais). Ces matières permettent de réaliser des échanges ioniques suffisants sans elles-mêmes relâcher une quantité d'ions qui dégraderait ou annulerait l'effet déionisant. Toutefois, le PPS est préféré au PPR car il présente une meilleure stabilité chimique. Ceci étant dit, il est moins flexible, i.e. moins déformable, que le PPR et plus coûteux.

Les figures 4a et 4b, qui sont des vues en coupe longitudinale d'axe longitudinal X d'un déioniseur 1 selon le premier mode de réalisation, permettent de mieux voir la cavité interne 16 et le couvercle 20. Toutefois, précisons que la cartouche 8 et le couvercle 20 tels que décrits dans la suite relativement à ce premier mode de réalisation sont identiques dans le deuxième mode de réalisation. En effet, seule l'embase 2 et l'agencement de ses éléments par rapport à la cartouche 8 et au couvercle 20 peuvent présenter des différences entre le premier et le deuxième mode de réalisation.

Comme illustré, la cavité interne 16 occupe une grande partie du volume intérieur de la cartouche 8, ce qui signifie qu'un grand volume de résine A échangeuse d'ions peut être stocké dans la cartouche. Sur les figures 4a et 4b, le déioniseur 1 est illustré en position assemblée, c'est-à-dire que le couvercle 20 est fixé à la seconde extrémité 12 longitudinale du corps et que la cartouche 8 est montée sur l'embase 2. Le couvercle 20 comporte un puits central 25 et une plateforme 21 reliée à ce puits central 25 par une jointure 20a. Dans la suite, la plateforme 21 et le puits central 25 sont décrits plus en détail. Au préalable, soulignons que, dans les modes de réalisation illustrés, le déioniseur 1 présente des dimensions centimétriques. Ceci étant dit, il peut, selon l'usage qui doit en être fait, présenter des dimensions supérieures.

Dans la position assemblée, la plateforme 21 s'étend transversalement par rapport à l'axe longitudinal X et ferme la seconde extrémité 12 du corps et ladite cavité interne 16. Effectivement, la cavité interne 16 est fermée d'une part par la première extrémité 11 longitudinale (qui est toujours fermée), et d'autre part par la plateforme 21 qui obstrue la deuxième extrémité 12 longitudinale (fermée lorsque le déioniseur 1 est en position assemblée) et qui forme donc une limite physique de la cavité interne. Dans l'exemple de réalisation illustré, la plateforme 21 présente une forme sensiblement cylindrique. La plateforme 21 comprend une face supérieure 21a délimitée par un pourtour périphérique 21b s'étendant autour de l'axe longitudinal X. Comme cela peut être mieux vu sur la vue de dessus illustrée sur la figure 4c, la face supérieure 21a présente une forme circulaire et elle centrée autour de l'axe longitudinal X. Le pourtour périphérique 21b présente quant à lui une forme cylindrique épousant un pourtour intérieur de la seconde extrémité 12 longitudinale de la cartouche. À cet égard, les dimensions de la plateforme 21 peuvent être choisies de manière appropriée pour permettre un ajustement précis du couvercle 20 dans la cartouche 8 une fois que ledit couvercle 20 est monté dans la cartouche. Ainsi, lorsque le couvercle 20 est monté dans la cartouche 8, il existe peu, voire pas, de jeu entre le couvercle et la cartouche.

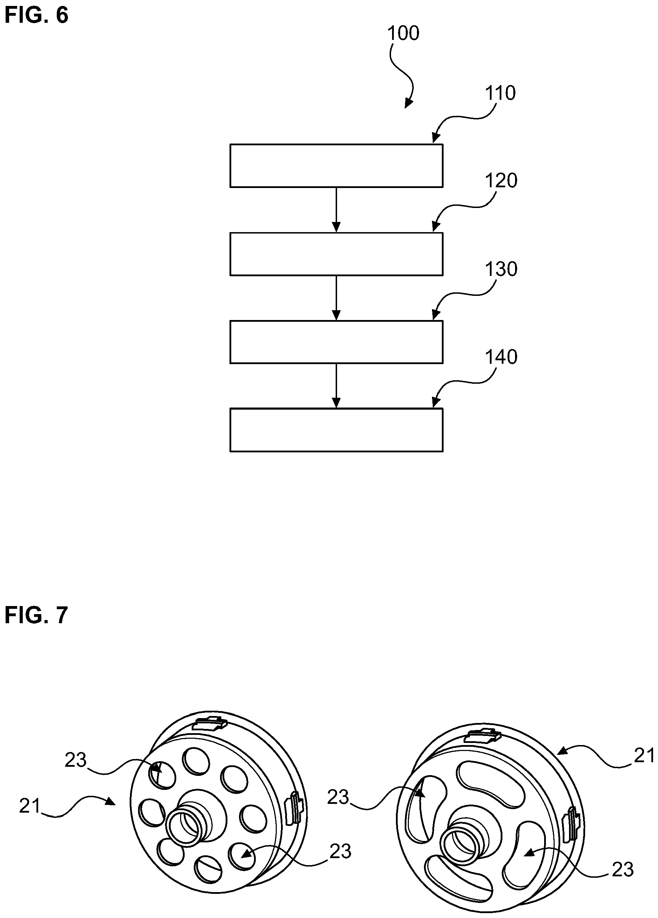

La plateforme 21 comprend des premiers orifices 23 configurés pour laisser passer le fluide F depuis ladite cavité interne 16 vers le port de sortie 4. Ces premiers orifices 23 sont mieux visibles sur la figure 4c. Dans l'exemple de réalisation illustré sur la figure 4c, les premiers orifices 23 sont distribués uniformément autour du puits central 25, et ont sensiblement le même diamètre ou la même dimension transversale, ce qui favorise une répartition homogène des flux de fluide F s'écoulant depuis la cavité interne 16 vers le port de sortie 4. Les premiers orifices 23 sont avantageusement formés dans la face supérieure 21a de la plateforme. Bien que sur la figure 4c les premiers orifices 23 soient au nombre de six, on pourra prévoir au moins quatre premiers orifices 23 et, de préférence, jusqu'à dix premiers orifices 23 sur la plateforme (Figure 7). Cela représente un bon compromis entre l'obtention d'une vitesse d'écoulement suffisante et la simplification du procédé de fabrication de la plateforme 21. Il convient alors d'adapter le diamètre desdits premiers orifices 23 en fonction du nombre de ces premiers orifices. Plus ce nombre est élevé plus le diamètre des premiers orifices 23 est réduit. Plus le nombre de premiers orifices 23 est réduit, dans la limite précédemment énoncées (quatre) plus la section de passage est élevée et la perte de charge réduite. La figure 7, à droite de la figure, illustre une variante de mise en oeuvre dans laquelle la plateforme 21 comprend quatre premiers orifices 23. À ce propos, bien que les premiers orifices 23 ont une forme circulaire dans les exemples de réalisation illustrés, ils peuvent présenter toute autre forme dans la mesure où ils laissent le fluide F passer de la cavité interne 16 au port de sortie. Comme visible également sur la figure 4c, les premiers orifices 23 sont recouverts par un premier tamis 23a ou comporte le premier tamis 23a. Le premier tamis 23a est configuré pour retenir la résine A échangeuse d'ions et l'empêcher de sortir de la cavité interne 16, et notamment de pénétrer dans une cavité d'évacuation 24 formée par la plateforme 21 et l'embase 2. En effet, en pratique, les premiers orifices 23 présentent des dimensions nettement plus élevées que celles des billes composant la résine A échangeuse d'ions, c'est-à-dire que chaque orifice présente des dimensions d'au moins un ordre de grandeur plus élevées que celles d'une bille de la résine A. Sans le premier tamis 23a, les billes seraient donc évacuées vers le port de sortie 4 sous l'effet de la gravité et du fluide F traversant le déioniseur 1. À cet égard et de préférence, le premier tamis 23a comprend des ouvertures dont les dimensions maximales sont strictement inférieures aux dimensions des billes composant la résine A échangeuse d'ions. De préférence, le premier tamis peut être fait dans la même matière que le reste du couvercle 20, ce qui permet d'en faciliter le recyclage.

À ce stade, il convient de souligner que la cavité d'évacuation 24 précédemment évoquée ne sert pas uniquement de canal de communication pour le fluide F sortant de la cavité interne 16. En effet, la cavité d'évacuation 24 s'étend autour du port d'entrée 3, et plus précisément autour d'un canal 7 du port d'entrée. Ce canal 7 occupe une position sensiblement centrale dans la cavité d'évacuation 24 et sera décrit plus en détail dans la suite de la présente description. Précisons également que la cavité d'évacuation 24 est délimitée longitudinalement par la face supérieure 21a de la plateforme et par une bordure inférieure (non référencée) de l'embase 2. Elle est également délimitée latéralement par la bordure périphérique 21b de la plateforme.

Le puits central 25 présente une forme générale tubulaire le long de l'axe longitudinal X. Il s'étend à l'intérieur du corps 10 lorsque le couvercle 20 est placé sur la cartouche 8. Dans le mode de réalisation illustré sur les figures, il s'étend depuis une zone centrale de la face supérieure 21a de la plateforme (Fig. 4c) si bien que lorsque le déioniseur 1 est en position assemblée (Fig. 4a et 4b), le puits central 25 occupe une position centrale à l'intérieur de la cavité interne 16. Ainsi, la dynamique de distribution du fluide F dans la cavité interne 16 dépend très peu de la géométrie de la cavité interne 16 en elle-même puisque les conditions d'écoulement sont uniformes autour du puits central 25.

En outre, le puits central 25 comporte une première extrémité 28 longitudinale fermée qui est située du côté de la première extrémité 11 longitudinale du corps. En pratique, la première extrémité 28 longitudinale du puits central est fermée par la première extrémité 11 longitudinale du corps. En effet, selon un mode de réalisation préféré, la première extrémité 11 longitudinale du corps comprend un dôme 13 configuré pour recevoir la première extrémité 28 du puits central. Le dôme 13 comprend un sommet et, en outre, un trou de purge d'air 13a et un bouchon 13b situés au niveau de son sommet. Le trou de purge d'air 13a sert à purger la cavité interne 16, c'est-à-dire sert à évacuer le surplus d'air compris dans la cavité interne 16 lorsque la cartouche est remplie. Le bouchon 13b est configuré pour être fixé au trou de purge d'air 13a de sorte que ce trou de purge d'air 13a est toujours fermé sauf si une purge doit être effectuée au moment du remplissage de la cartouche 8. Le bouchon 13b n'est séparé du trou de purge d'air 13a que lorsqu'une purge de la cavité interne 16 est effectuée. Ainsi, lorsque le déioniseur 1 est en position assemblée, tel qu'illustré sur les figures, la première extrémité 11 longitudinale du corps est toujours fermée. Concomitamment, comme la première extrémité longitudinale 28 du puits central est reçue dans le dôme 13, elle est également fermée par la première extrémité 11 longitudinale du corps. Il convient de noter que le dôme 13 n'est pas obligatoire et que la première extrémité 11 longitudinale pourrait tout à fait être fermée par une simple paroi épousant des contours de la première extrémité 28 longitudinale du puits central.

Le puits central 25 comprend, en outre une seconde extrémité 29 longitudinale qui est reliée à la plateforme 21 et qui est raccordée fluidiquement au port d'entrée 3. Dans les modes de réalisation illustrés sur les figures, la seconde extrémité 29 longitudinale est reliée à la plateforme 21 par l'intermédiaire de la jointure 20a reliant la plateforme 21 et le puits central 25. Comme déjà mentionné précédemment et visible sur les figures, le port d'entrée 3 comprend le canal 7 de raccordement. Ce canal 7 de raccordement s'étend jusqu'au puits central 25. Plus précisément, il débouche directement au niveau de la seconde extrémité 29 longitudinale du puits central lorsque le déioniseur 1 est en position assemblée, ce qui crée un chemin pour le fluide F arrivant par le port d'entrée 3. Dans le mode de réalisation illustré, le canal 7 de raccordement est sensiblement droit. Toutefois, il peut présenter toute autre forme appropriée selon la position du port d'entrée 3. Ce canal 7 de raccordement peut par exemple présenter une forme en L pour un déioniseur 1 selon le deuxième mode de réalisation (figs. 3a et 3b).

À ce propos, comme dans le mode de réalisation illustré aux figs. 4a et 4b, le puits central 25 et le canal 7 de raccordement sont alignés le long de l'axe longitudinal X, c'est-à-dire que le puits central 25 s'étend dans la continuité du port d'entrée 3, parallèlement au canal 7 de raccordement et dans le prolongement dudit canal 7 de raccordement, lorsque le fluide F se déplace dans le port d'entrée 3 et dans le puits central, il ne subit pas de ralentissement à part celui éventuellement causé par son propre poids. De préférence, la jointure 20a épouse les contours d'une extrémité du canal de raccordement proximale de la seconde extrémité 29 longitudinale du puits central lorsque le déioniseur 1 est en position assemblée. Cela permet de stabiliser la liaison entre le puits central 25 et le port d'entrée 3.

Dans le déioniseur 1 selon le second mode de réalisation, il n'en n'est pas ainsi puisque le port d'entrée 3 n'est pas aligné avec le puits central 25. Le port d'entrée 3 y est en effet aligné avec le port de sortie 4 et, éventuellement la soupape de la vanne multivoie 6. Le canal 7 de raccordement présente une forme de L, ce qui est susceptible de ralentir légèrement le fluide F. Il convient donc d'en tenir compte lorsque le débit de fluide est fixé.

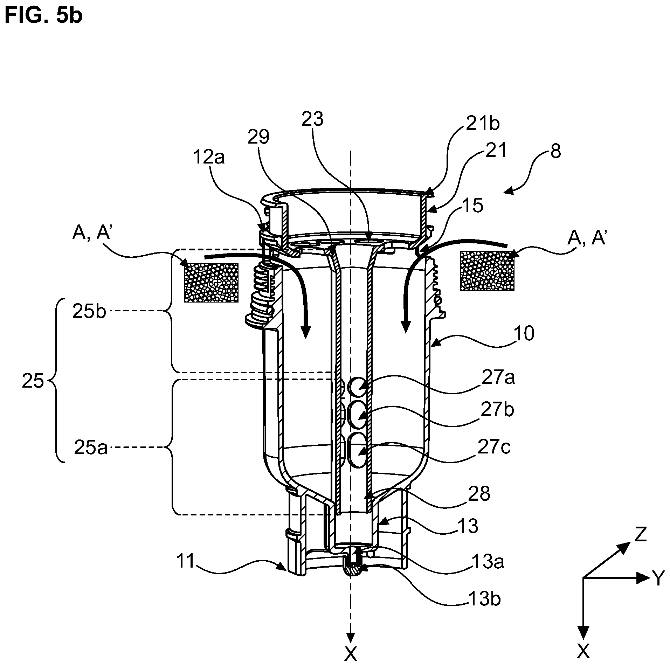

Selon un premier aspect de l'invention, le puits central 25 comprend deux tronçons 25a, 25b adjacents (visibles sur la figure 5b) entre ses première 28 et seconde 29 extrémités. Selon le premier aspect de l'invention, un tronçon supérieur 25a est situé côte à côte de la première extrémité 28 longitudinale et comporte des seconds orifices 27a, 27b, 27c recouverts par un second tamis ou comportant ce second tamis. Les seconds orifices 27a, 27b, 27c sont configurés pour laisser passer le fluide F depuis le puits central 25 jusque dans la cavité interne 16, et le second tamis est configuré pour retenir la résine A échangeuse d'ions et l'empêcher de sortir de la cavité interne 16 pour atteindre l'intérieur du puits central 25. Toujours selon le premier aspect de l'invention, un tronçon inférieur 25b est situé du côté de la seconde extrémité 29 et est dépourvu d'orifices. En référence plus précisément à la figure 4b, lorsque le fluide F pénètre dans le déioniseur 1, il traverse successivement le port d'entrée 3 de fluide, le tronçon inférieur 25b, le tronçon supérieur 25a, les seconds orifices 27a, 27b, 27c, la résine A échangeuse d'ions, les premiers orifices 23, la plateforme 21 - notamment la cavité d'évacuation 24 formée par la plateforme 21 et l'embase 2 - et le port de sortie 4.

Dans le déioniseur 1 selon le premier aspect de l'invention, le puits central 25 ne comprend des seconds orifices 27a, 27b, 27c qu'au niveau de son tronçon supérieur 25a, à savoir le tronçon situé du côté de la première extrémité 11 longitudinale du corps. Ainsi, lorsque le fluide F pénètre dans le déioniseur 1, il ne peut pas directement pénétrer dans la cavité interne 16. Il est en effet contraint de parcourir l'intégralité du tronçon inférieur 25b avant d'atteindre les seconds orifices 27a, 27b, 27c. Il ne peut donc pas traverser qu'une partie infime de la résine A échangeuse d'ions et est, au contraire, contraint d'atteindre les seconds orifices 27a, 27b, 27c du tronçon supérieur 25a pour passer du puits central 25 jusque dans la cavité interne 16. Le fluide F est donc contraint de traverser la résine A échangeuse d'ions sur la quasi-totalité de sa hauteur avant de ressortir du déioniseur 1 par le port de sortie 4 en passant par les premiers orifices 23. Le temps de résidence du fluide F dans la cavité interne 16 est donc significativement allongé en comparaison des déioniseurs de l'art antérieur ce qui permet d'assurer des échanges suffisants avec la résine A échangeuse d'ions pour que le niveau de conductivité dans le fluide soit faible.

En outre, contrairement aux déioniseurs de l'art antérieur, le maintien du niveau de conductivité du fluide à un niveau faible peut être facilement adapté avec le déioniseur 1 selon l'invention selon le volume de fluide à traiter, ceci sur la base d'un nombre limité de paramètres géométriques du déioniseur 1. En effet, le temps de résidence du fluide F dans la cavité interne 16 est peu dépendant du débit du fluide et peu, voire pas, dépendant des caractéristiques de la plateforme 21, notamment des dimensions et/ou de la forme des premiers orifices 23 de la plateforme. Au contraire, dans les déioniseurs de l'art antérieur, ces paramètres impactent beaucoup le temps de résidence du fluide dans la cavité interne 16. En effet, comme il y a des seconds orifices proches du port de sortie de ces déioniseurs, cela a pour effet de rendre le temps de résidence du fluide sortant par ces orifices très dépendant des paramètres du fluide entrant dans le déioniseur et très dépendant des paramètres géométriques en sortie du déioniseur, notamment des orifices de sortie de la cavité interne.

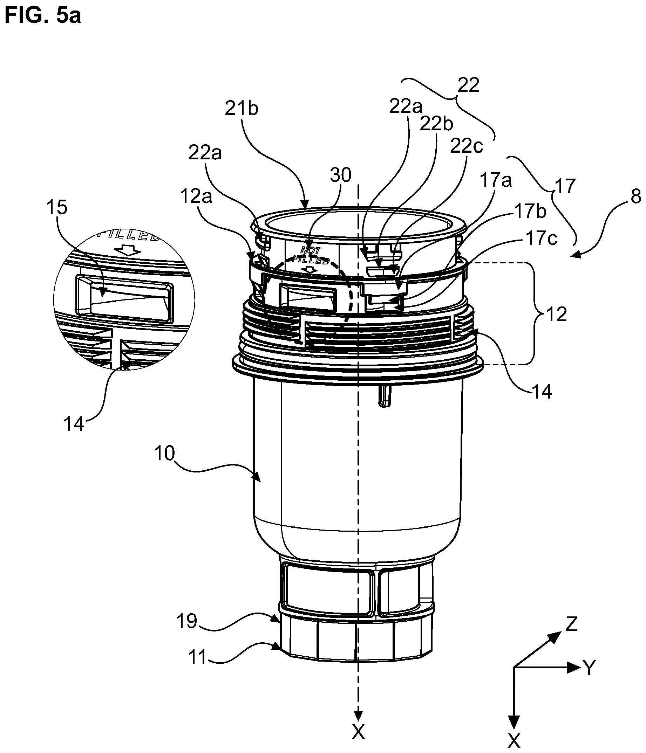

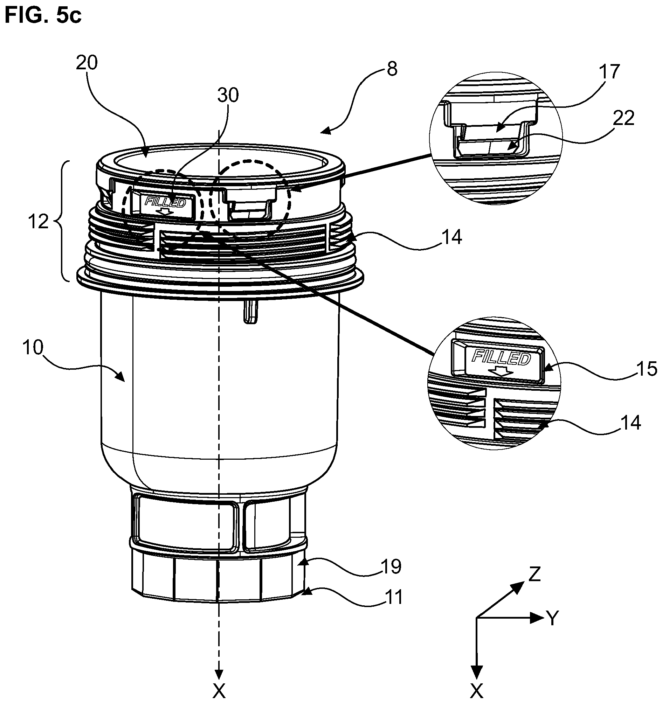

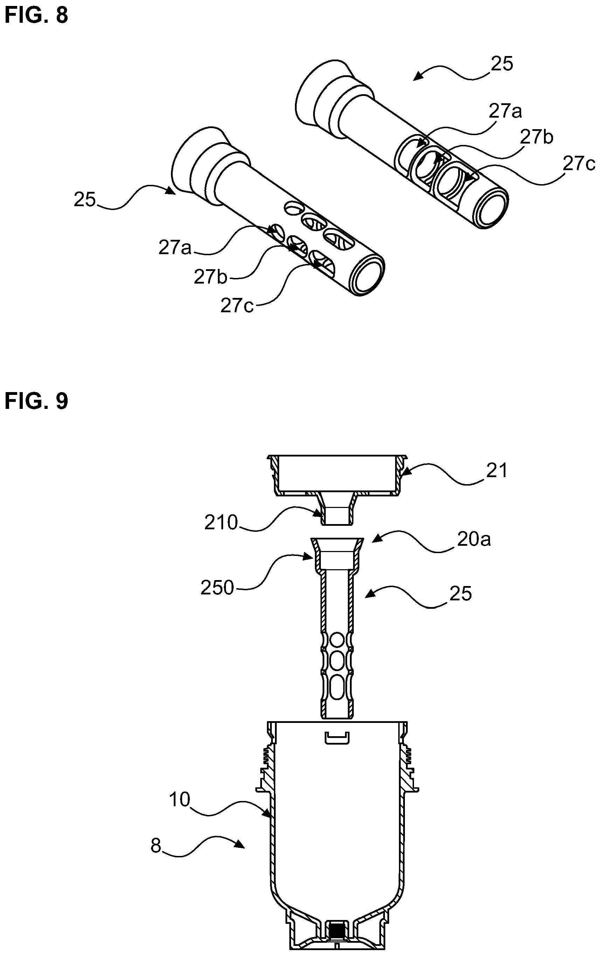

Comme précédemment mentionné, le tronçon supérieur 25a comporte les seconds orifices 27a, 27b, 27c. Dans le mode de réalisation illustré sur les figures 4a, 4b, 5a, 5b et 5c, les seconds orifices 27a, 27b, 27c sont répartis à la fois longitudinalement, i.e. le long de l'axe longitudinal X, et angulairement sur toute la circonférence du puits central 25. Il y a donc une pluralité de seconds orifices, respectivement 27a, 27b et 27c, le long de l'axe longitudinal X et, à hauteur donnée, il y a également une pluralité de seconds orifices sur toute la circonférence du puits central 25 formant des rangées annulaires de seconds orifices. C'est ainsi que le tronçon supérieur 25a comprend une pluralité de seconds orifices 27a distaux de la première extrémité 28 longitudinale qui sont situés à une même hauteur. De même, le tronçon supérieur 25a comprend une pluralité de seconds orifices 27c proximaux de la première extrémité 28 longitudinale qui sont situés à une même hauteur. Il en est également de même pour tous les seconds orifices 27b intermédiaires situés entre les seconds orifices 27a distaux et les seconds orifices 27c proximaux de la première extrémité 28 longitudinale du puits central. Comme également illustré sur 4a, 4b, 5a, 5b et 5c, et la figure 8, à gauche de la figure, les seconds orifices 27a, 27b et 27c sont répartis circonférentiellement tous les 90°, c'est-à-dire que les seconds orifices 27a, 27b et 27c d'une même rangée annulaire sont angulairement espacés d'un angle de 90°. Il peut donc en principe il y a avoir jusqu'à quatre seconds orifices 27a, 27b, 27c par rangée annulaire. Cette configuration requiert l'utilisation de moules à tiroirs pour la fabrication du puits central 25.

À ce propos, si, tel qu'illustré sur les figures, le tronçon supérieur 25a ne comprend qu'une rangée annulaire de seconds orifices 27b intermédiaires - et donc trois rangées annulaires de seconds orifices 27a, 27b, 27c, le tronçon supérieur 25a pourrait comprendre davantage de rangées annulaires de seconds orifices 27b, 27b' (non illustré), 27b" (non illustré), etc. intermédiaires si les dimensions du déioniseur 1 devait être agrandie.

Comme également illustré sur les figures 4a et 4b, les seconds orifices 27a, 27b, 27c présentent une forme sensiblement ellipsoïdale. Toutefois, les seconds orifices 27a, 27b, 27c pourraient avoir toute autre forme souhaitée. Dans le cadre de l'invention, il importe seulement que les seconds orifices soient aptes à laisser passer le fluide F depuis le puits central 25 jusque dans la cavité interne 16. Il en est de même pour ce qui concerne les dimensions desdits seconds orifices 27a, 27b, 27c. Ceci étant dit, il est avantageux que les seconds orifices 27a, 27b, 27c présentent des dimensions, selon l'axe longitudinal X, ne différant pas de plus de 10% par rapport aux dimensions, selon un axe transversal Y, du puits central 25 et du port d'entrée 3. Autrement dit, il est avantageux que les diamètres respectifs des sections longitudinales des seconds orifices 27a, 27b, 27c, de la section transversale du puits central 25 et de la section transversale du port d'entrée 3 ne diffèrent pas de plus de 10%. En effet, cela évite de créer des singularités géométriques et de générer de brusques changements de vitesses et de comportements du fluide F à l'intérieur du déioniseur 1. De préférence, les diamètres respectifs des sections longitudinales des seconds orifices 27a, 27b, 27c, de la section transversale du puits central 25 et de la section transversale du port d'entrée 3 sont de dimensions centimétriques.

À ce propos, selon un mode de réalisation particulièrement avantageux du déioniseur 1, les seconds orifices 27a, 27b, 27c ont des diamètres d₁, d₂, d₃ croissants le long de l'axe longitudinal X, les seconds orifices 27c proximaux de la première extrémité 28 longitudinale ayant les diamètres d₃ les plus élevés tandis que les seconds orifices 27a distaux de la première extrémité 28 longitudinale ont les diamètres d₁ les plus faibles. Autrement dit, le diamètre des seconds orifices 27a, 27b, 27c augmente le long de l'axe longitudinal X dans la direction de déplacement du fluide F. Encore autrement dit, plus les seconds orifices 27a, 27b, 27c sont éloignés de la deuxième extrémité 29 longitudinale plus ils ont un diamètre élevé. Une telle configuration permet d'obtenir un débit de fluide plus élevé dans une zone de la cavité interne 16 qui est la plus éloignée des premiers orifices 23 et un débit de fluide plus faible dans une zone de la cavité interne 16 qui est plus proche des premiers orifices 23 que la zone traversée par un débit de fluide plus élevé. Ainsi, le fluide F qui pénètre dans la cavité interne 16 par les seconds orifices 27a distaux de la première extrémité 28 longitudinale - plus proches du port d'entrée 3 - a une vitesse suffisamment faible lorsqu'il pénètre dans la cavité interne 16 pour avoir le temps de réaliser des échanges avec la résine A échangeuse d'ions. Concomitamment, le fluide F qui pénètre dans cavité interne 16 par les seconds orifices 27c proximaux de la première extrémité 28 longitudinale - plus éloignée du port d'entrée - a une vitesse suffisamment élevée pour atteindre lesdits seconds orifices 27c proximaux et pour réaliser des échanges suffisants avec la résine A échangeuse d'ions.

Selon une mise en oeuvre particulière illustrée sur la figure 8, à droite de la figure, les seconds orifices 27a, 27b et 27c sont répartis circonférentiellement tous les 180°, c'est-à-dire que les seconds orifices 27a, 27b et 27c d'une même rangée annulaire sont angulairement espacés d'un angle de 180°. Il peut donc en principe il y a avoir jusqu'à deux seconds orifices 27a, 27b, 27c par rangée annulaire. Cette configuration est plus simple que celle précédemment vu en référence aux figures 4a, 4b, 5a, 5b et 5c car elle requiert l'utilisation de moule plus simples que les moules à tiroirs pour la fabrication du puits central 25. Ce type de moules peut être qualifié de moules « à gaufre » car il ne nécessite pas une mise en place aussi complexe que celle requise pour les moules à tiroir. De plus, cela permet d'augmenter la section de passage du fluide et de limiter la perte de charge.

Comme déjà mentionné, les seconds orifices 27a, 27b, 27c sont recouverts par un second tamis (non illustré). Le second tamis est configuré pour retenir la résine A échangeuse d'ions et l'empêcher de sortir de la cavité interne 16, et notamment pénétrer dans le puits central 25. À l'instar des premiers orifices 23 et en pratique, les seconds orifices 27a, 27b, 27c présentent des dimensions nettement plus élevées que celles des billes composant la résine A échangeuse d'ions, c'est-à-dire que chaque second orifice 27a, 27b, 27c présente des dimensions d'au moins un ordre de grandeur plus élevées que celles des billes de la résine A. Sans le second tamis, les billes pourraient atteindre le puits central 25 et réduire considérablement le débit du fluide F lorsque celui-ci traverse le déioniseur 1. À cet égard et de préférence, le second tamis comprend des ouvertures dont les dimensions maximales sont strictement inférieures aux dimensions des billes composant la résine A échangeuse d'ions. De préférence, le second tamis peut être fait dans la même matière que le reste du couvercle 20, ce qui permet d'en faciliter le recyclage.

Selon une mise en oeuvre avantageuse, les dimensions longitudinales du tronçon inférieur 25b sont au moins égales aux dimensions longitudinales du tronçon supérieur 25a. Ainsi, même si le tronçon supérieur 25a et le tronçon inférieur 25b présentent des dimensions proches, cela signifie que le fluide F est obligé d'atteindre une mi-hauteur de la cavité interne 16 avant de pouvoir pénétrer dans ladite cavité interne. Lorsque, par exemple, le taux de remplissage de la cavité interne 16 par la résine A échangeuse d'ions est supérieur à 80%, il est encore plus avantageux que le tronçon inférieur 25b présente des dimensions longitudinales supérieure d'au moins 30%, de préférence d'au moins 40% par rapport aux dimensions longitudinales du tronçon supérieur 25a. Comme le tronçon inférieur 25b est plus long que le tronçon supérieur 25a, le fluide F est contraint de parcourir une plus grande distance dans le puits central 25 avant de pouvoir pénétrer dans la cavité interne 16. Quelle que soit la configuration choisie, il convient de prendre en compte, le cas échéant, l'emprise de la première extrémité 11 longitudinale du corps sur la première extrémité 28 longitudinale du puits central, qui pour rappel en épouse préférentiellement les contours.

Selon une mise en oeuvre particulière illustrée aux figures 4a et 4b, la plateforme 21 et le puits central 25 sont formés d'une seule pièce. Autrement dit, la plateforme 21 est intégral avec le puits central 25.

En variante, et telle qu'illustré à la figure 9, la plateforme 21 et le puits central 25 sont des pièces distinctes. Autrement dit, la plateforme 21 et le puits central 25 sont fournis séparément. Dans cette variante de réalisation, bien que la plateforme 21 est toujours reliée au puits central 25 par la jointure 20a, la plateforme 21 et le puits central 25 comprennent chacun, au niveau de ladite jointure 20a, des moyens complémentaires 210, 250 de fixation. Cela permet de réduire les dimensions longitudinales du puits central 25 et ainsi de rendre la cartouche 8 plus compacte. En outre, comme la plateforme 21 et le puits central 25 peuvent être fabriqués indépendamment l'un de l'autre, ils peuvent également être recyclés indépendamment au lieu d'être recyclés en intégral.

À cet égard, la plateforme 21 comprend un premier moyen complémentaire 210 de fixation au puits central 25, tandis que le puits central 25 comprend un deuxième moyen complémentaire 250 de fixation. À titre d'exemple illustratif, le premier moyen complémentaire 210 peut consister en un élément tubulaire mâle s'étendant en saillie depuis la face supérieure 21a de la plateforme 21, tandis que le deuxième moyen complémentaire 250 peut consister en un élément tubulaire femelle s'étendant depuis la seconde extrémité 29 du puits central 25 et dans lequel l'élément tubulaire mâle 210 de la plateforme 21 peut s'insérer.

Ceci étant dit, on peut prévoir que le premier moyen complémentaire 210 consiste en un élément tubulaire femelle s'étendant en saillie depuis la face supérieure 21a de la plateforme 21, tandis que le deuxième moyen complémentaire 250 consiste en un élément tubulaire mâle s'étendant depuis la seconde extrémité 29 du puits central 25 et apte à s'insérer dans l'élément tubulaire femelle 210 de la plateforme.

D'autres moyens complémentaires de fixation de la plateforme 21 au puits central 25 connus de l'homme du métier peuvent être envisagés sans préjudice pour le concept inventif à la base de la présente invention.

En référence maintenant aux figures 5a à 5c, nous allons décrire les moyens d'assembler la cartouche 8 et le couvercle 20 ainsi que les différentes étapes d'assemblage. Précisons que le montage de la cartouche sur l'embase 2 a précédemment été décrit.

Selon un exemple de réalisation illustré sur les figures, la plateforme 21 comprend à cet égard des premiers moyens 22 d'accroche aptes à coopérer avec des seconds moyens 17 complémentaires d'accroche de la cartouche 8 de sorte à permettre la fixation du couvercle 20 dans la cartouche 8. Toujours selon cet exemple de réalisation, les premiers moyens 22 d'accroche de la plateforme consistent en des protubérances 22a, 22c séparées par un premier espace 22b. Les seconds moyens 17 d'accroche de la cartouche consistent, quant à eux, en des encoches 17a, 17c et une patte 17b. Les seconds moyens 17 d'accroche sont pourvus au niveau de la seconde extrémité 12 longitudinale du corps.

Pour fixer le couvercle 20 à la cartouche 8, il convient d'introduire le couvercle 20 dans la cartouche 8 en faisant pénétrer le puits central 25 dans la cavité interne 16. Lorsque la plateforme 21 est à proximité de la seconde extrémité 12 longitudinale du corps, l'utilisateur doit exercer une légère pression sur le couvercle 20 de manière à ce que les premiers moyens 22 d'accroche se clipsent aux seconds moyens 17 d'accroche. Lors du clipsage, une première protubérance 22a s'imbrique dans une première encoche 17a, tandis que parallèlement une deuxième protubérance 22c s'imbrique dans une deuxième encoche 17c et que la patte 17b s'imbrique dans le premier espace 22b. La coopération de tels premiers moyens 22 d'accroche avec de tels seconds 17 moyens d'accroche permet de fiabiliser la fixation du couvercle 20 à la cartouche 8.

En outre, selon un exemple de réalisation non illustré, les premiers moyens d'accroche et les seconds moyens d'accroche pourraient être inversés, c'est-à-dire que les premiers moyens d'accroche pourraient consister en des encoches et une patte tandis que les seconds moyens d'accroche pourraient consister en des protubérances séparées par un premier espace. D'autres moyens pour fixer le couvercle 20 à la cartouche 8 pourraient être envisagés sans préjudice pour le déioniseur 1 selon le premier aspect de la présente invention.

À la fin de l'étape de clipsage, un rebord annulaire 21b inférieur du couvercle est en appui sur un rebord annulaire 12a de la seconde extrémité 12 longitudinale. En outre, la première extrémité 28 longitudinale du puits central est en appui sur la première extrémité 11 longitudinale du corps.

Il convient de noter que lorsque la fixation du couvercle 20 à la cartouche 8 n'est pas associée à un remplissage de la cartouche 8 ou, tout du moins lorsque la cavité interne 16 est vide, ces étapes peuvent être mises en oeuvre sans que la cartouche 8 ne soit retournée comme on peut le voir sur les figures. Autrement dit, il n'est pas nécessaire d'orienter la cartouche 8, tel qu'illustré sur les figures, si la cavité interne 16 est vide ou doit, momentanément être maintenue vide.

À ce propos, nous allons maintenant décrire les différentes étapes pour effectuer le remplissage d'un déioniseur 1 tel que précédemment décrit, notamment une cartouche 8 d'un tel déioniseur.

À cet égard et à titre préliminaire, il est particulièrement avantageux que la seconde extrémité 12 longitudinale du corps comprenne des ouvertures 15 latérales de chargement de la résine A échangeuse d'ions. Ces ouvertures 15 latérales présentent donc, de préférence, des dimensions appropriées pour introduire les billes formant la résine A échangeuse d'ions. Pour rappel, les billes de résine présentent généralement des dimensions comprises entre 0,2 mm et 2 mm. Pour faciliter le chargement des billes, il convient donc que les ouvertures 15 de chargement présentent des dimensions au moins 3 à 7 fois plus élevées que les dimensions d'une bille unique. Il est également avantageux que la plateforme 21 et le couvercle 8 comprennent, respectivement, les premiers moyens 22 d'accroche au couvercle 8 et les seconds moyens 17 d'accroche à la plateforme 21 de sorte à pouvoir être fixés.

Lors d'une première étape 110, on fournit une cartouche 8 et un couvercle 20 comme ci-avant décrits. Lorsque la plateforme 21 et le puits central 25 sont distincts, et donc fournis séparément, on fixe la plateforme 21 au puits central 25 par l'intermédiaire des moyens complémentaires 210, 250 de fixation si la plateforme 21 et le puits central 25 ne sont pas assemblés.

Lors d'une deuxième étape 120, on met le couvercle 20 dans une position, dite position de remplissage, dans laquelle les seconds 17 moyens d'accroche sont libres et les ouvertures 15 latérales sont ouvertes de sorte à donner accès à la cavité interne 16 pour le remplissage. Les seconds moyens 17 d'accroche sont dits « libres » par opposition à une situation dans laquelle ils sont en prise avec les premiers moyens 22 d'accroche. Lors de cette étape, il est préférable, dans un premier temps, de disposer la cartouche 8 verticalement de sorte à ce que la première extrémité 11 longitudinale du corps soit orientée vers le sol, et donc soit plus proche du sol que les autres parties de la cartouche. Ensuite, le couvercle 20 est positionné de sorte à ce que le puits central 25 soit à l'intérieur de la cavité interne 16 en veillant à ce que les seconds 17 moyens d'accroche soient libres et les ouvertures 15 latérales soient ouvertes. Cette position est mieux visible sur la figure 5a. Cette position est naturelle car les protubérances débordent radialement sur le rebord annulaire 12a. À cet égard, la plateforme 21 peut avantageusement être dimensionnée de sorte à ce que le chant annulaire 12a retienne la protubérance 22a lorsqu'aucune pression n'est exercée sur le couvercle 20, c'est-à-dire lorsque le couvercle 20 est simplement posé sur la cartouche 8.

Lors d'une troisième étape 130, on remplit la cavité interne 16 de résine A échangeuse d'ions par l'intermédiaire des ouvertures 15 latérales comme illustré à la figure 5b. Lors de cette étape, il est préférable de maintenir la cartouche 8 dans une position verticale dans laquelle la première extrémité 11 longitudinale du corps est orientée vers le sol. En outre, de préférence, la quantité de résine A à charger est prédéterminée afin que la quantité de résine A soit appropriée pour permettre le contrôle de la conductivité du fluide F, que la quantité de résine A soit appropriée pour un maintien compact des billes, et que la quantité de résine A chargée n'empêche pas la fixation du couvercle 20 à la cartouche 8 lors de la prochaine étape.

Lors d'une quatrième étape, on ferme la cartouche 8 au moyen du couvercle 20. À cet égard, un simple mouvement d'appui sur le couvercle 20 par translation le long de l'axe longitudinal X permet la coopération du couvercle 20 avec la cartouche 8. De manière avantageuse, la fermeture de la cartouche 8 provoque un tassement voire une compression de la résine A échangeuse d'ions dans la cavité interne 16. Cela permet d'assurer un maintien compact des billes de la résine A. Au cours de cette étape, et comme déjà vu précédemment, la première protubérance 22a s'imbrique dans la première encoche 17a, tandis que parallèlement la deuxième protubérance 22c s'imbrique dans la deuxième encoche 17c et que la patte 17b s'imbrique dans le premier espace 22b. Le couvercle 20 se trouve alors dans une position, dite position d'utilisation, dans laquelle les seconds moyens 17 d'accroche sont en prise avec les premiers moyens 22 d'accroche et dans laquelle les ouvertures 15 latérales sont fermées par la plateforme 21.

Bien que le remplissage du déioniseur 1 puisse avantageusement être réalisé par l'intermédiaire des ouvertures 15 latérales, ceci n'est pas obligatoire. Il est possible de remplir le déioniseur 1 en versant directement la résine A échangeuse d'ions dans la cavité interne 16. Cette variante est cependant moins pratique que le mode de réalisation précédemment décrit utilisant les ouvertures 15 latérales, car elle requiert d'éliminer le surplus de résine A qui pénètre dans le puits central 25 au moment de son insertion dans la cavité interne 16.

Selon un deuxième aspect, l'invention concerne en outre un filtre 1' pour un circuit de fluide 50. Des exemples de circuits de fluide 50 ont été décrits au début de la description détaillée et ne sont pas rappelés ici. Dans la suite de la présente description nous décrivons plus précisément le filtre selon le deuxième aspect de l'invention. Le filtre 1' peut être toute sorte de filtres bien connus de l'homme du métier, par exemple un filtre à particules (bactéries, contaminants, etc.) pour le traitement de l'eau utilisée pour des activités aquatiques ou récréatives, industrielles, etc. La résine filtrante A' peut adopter toute forme connue dans le commerce. De préférence, la résine filtrante A' se présente sous forme de billes de dimensions comprises entre 0,2 et 2 mm.

Le filtre 1' comprend une cartouche 8 comportant un corps 10 et un couvercle 20.

Le corps 10 présente une forme générale tubulaire le long d'un axe longitudinal X. Le corps 10 comprend une première extrémité 11 longitudinale fermée et une seconde extrémité 12 longitudinale qui est configurée pour être fixée au couvercle 20. Selon un exemple de réalisation du filtre 1', le filtre 1' est un filtre fixe. Dans ce cas, le corps 10 comprend un port d'entrée 3 de fluide et un port de sortie 4 de fluide, lesdits ports d'entrée et de sortie étant directement raccordés au circuit de fluide 50. En variante, le filtre 1' est un filtre à cartouche. À cet égard, le filtre 1' comprend alors une embase 2 de raccordement fluidique au circuit de fluide, cette embase 2 comportant le port d'entrée 3 de fluide et le port de sortie 4 de fluide. Dans cette variante de réalisation, la cartouche 8 est configurée pour être fixée de manière amovible sur l'embase 2. À cet égard, l'embase 2 peut comprendre une interface 5 de fixation, située à proximité d'une bordure supérieure de ladite embase, à laquelle la cartouche 8 peut être fixée. La description relative au premier aspect de l'invention décrit de manière détaillée la manière dont la cartouche 8 peut être fixée à l'embase 2 par l'intermédiaire d'une telle interface 5 de fixation.

Le corps 10 comprend une cavité interne 16 de stockage apte à stocker une résine filtrante A' en quantité appropriée pour effectuer des échanges avec le fluide F lorsqu'il transite dans la cartouche 8. La résine filtrante A' n'est pas limitée à un type particulier de résine. Elle est adaptée à l'usage qui doit être fait du filtre 1' selon ce deuxième aspect de l'invention. À titre d'exemples, la résine filtrante A' peut être faite d'une ou plusieurs matières décontaminantes, bactéricides, virucides, etc. Selon un mode de réalisation particulier, la résine filtrante A' est une résine échangeuse d'ions et convient donc à un filtre 1' de type déioniseur.

Le couvercle 20 est destiné à être fixé à la seconde extrémité 12 longitudinale du corps. À cet égard, comme nous le verrons dans la suite, le couvercle 20 et la cartouche 8 peuvent avantageusement comprendre des moyens d'accroche complémentaires. Le couvercle 20 comporte une plateforme 21 qui permet d'ouvrir et de fermer alternativement la seconde extrémité 12 longitudinale du corps et, avec elle, la cavité interne 16 puisque l'autre extrémité, à savoir la première extrémité 11 longitudinale du corps, est fermée. Selon un mode de réalisation préféré, la plateforme 21 s'étend transversalement par rapport à l'axe longitudinal X. Elle comprend une face supérieure 21a délimitée par un pourtour périphérique 21b s'étendant autour de l'axe longitudinal X. De préférence, la face supérieure 21a présente une forme circulaire et est centrée autour de l'axe longitudinal X. De manière avantageuse, le pourtour périphérique 21b présente une forme épousant un pourtour intérieur de la cartouche ce qui lui permet d'être au plus proche de la cartouche 8, voire même être en contact étanche avec la cartouche 8. À cet égard, il est avantageux que les dimensions de la plateforme 21 soient choisies de manière appropriée pour permettre un ajustement précis du couvercle 20 dans la cartouche 8 une fois que ce couvercle 20 est monté dans la cartouche.

Selon un mode de réalisation préféré, le couvercle 20 joue également un rôle dans la distribution du fluide F à travers le filtre 1' et le circuit de fluide 50. À cet égard, la plateforme 21 peut comprendre des premiers orifices 23 configurés pour laisser passer le fluide F depuis ladite cavité interne 16 vers le port de sortie 4. Ces premiers orifices 23 ne sont pas décrits en détail et il est fait référence à la description relative au premier aspect de l'invention qui présente d'autres caractéristiques possibles de ces premiers orifices 23. En outre, toujours concernant la distribution du fluide F dans le filtre 1' et le circuit de fluide 50, la plateforme 21 peut être reliée à un puits central 25 ayant une forme générale tubulaire le long de l'axe longitudinal X qui s'étend à l'intérieur du corps 10. Le puits central 25 peut avantageusement comprendre des seconds orifices 27a, 27b, 27c pour laisser passer le fluide F depuis ce puits central 25 jusque dans la cavité interne 16. Ces seconds orifices 27a, 27b, 27c ne sont pas décrits en détail et il est fait référence à la description relative au premier aspect de l'invention qui présente d'autres caractéristiques possibles de ces seconds orifices.

Selon le deuxième aspect de l'invention, la seconde extrémité 12 longitudinale du corps comprend des ouvertures 15 latérales de la résine filtrante A'. Les ouvertures 15 latérales servent en effet à charger la résine filtrante A' dans la cavité interne 16. Ces ouvertures 15 latérales présentent donc des dimensions appropriées pour que la résine filtrante, quelle que soit sa forme, puisse être insérée dans la cavité interne 16.

Toujours selon ce deuxième aspect de l'invention, le couvercle 20 est configuré pour se déplacer en translation le long de l'axe longitudinal X depuis une position de remplissage, dans laquelle les ouvertures 15 latérales sont ouvertes de sorte à permettre le remplissage de la cavité interne 16, vers une position d'utilisation, dans laquelle les ouvertures 15 latérales sont fermées par la plateforme 21 du couvercle. Ainsi, lorsque le couvercle 20 est en position de remplissage et que les ouvertures 15 latérales sont ouvertes, la résine filtrante A' peut être chargée dans la cavité interne 16 par tout moyen approprié tandis que, lorsque le couvercle 20 est en position d'utilisation et les ouvertures 15 latérales fermées par la plateforme 21, il est impossible d'avoir accès à la cavité interne 16 par ce biais. D'ailleurs, dans cette position d'utilisation, outre les ouvertures 15 latérales, la second extrémité 12 longitudinale du corps est également fermée. Lorsque la cartouche 8 atteint cette position d'utilisation, cela provoque avantageusement un tassement voire une compression de la résine A' filtrante dans la cavité interne 16, ce qui assure un maintien compact de la résine A' filtrante dans la cavité interne.

Le filtre 1' selon ce second aspect de l'invention surmonte de nombreux inconvénients des filtres selon l'art antérieur. En effet, dans les filtres selon l'art antérieur, le chargement/remplissage de la cavité interne ne peut se faire que par le fond de la cavité interne, ce fond étant amovible. Or, ce fond, assimilable à un couvercle, est généralement formé de plusieurs pièces qui doivent être préalablement séparées du filtre pour que la résine filtrante puisse être chargée dans la cavité interne. Généralement le démontage de ces pièces nécessite la mise en oeuvre d'opérations fastidieuses qui peuvent être particulièrement complexes. Le remontage de ces pièces dans le filtre peut s'avérer également fastidieux et très complexe. Le filtre 1' selon le second aspect de l'invention permet non seulement de remplir aisément la cavité interne mais en outre, de subséquemment monter le couvercle 20 par un simple appui de l'utilisateur sur celui-ci. Le filtre 1' est donc particulièrement simple d'utilisation. La position des ouvertures 15, à savoir latéralement au niveau de la seconde extrémité 12 longitudinale du corps est donc particulièrement adaptée pour que le remplissage puisse être effectué simplement et sans avoir à effectuer des manipulations complexes et nombreuses pour monter ou remonter le couvercle 20.

Un exemple de filtre 1' est illustré aux figures 5a à 5c, qui montrent successivement le couvercle 20 en position de remplissage (Figs. 5a et 5b) et en position d'utilisation (Fig. 5c). Selon la configuration du filtre 1', il peut être nécessaire de retourner le filtre 1' pour ne pas que la résine filtrante A' tombe pendant le chargement ou exerce une trop forte pression sur le couvercle 20 pendant le chargement. À ce propos, les ouvertures 15 latérales ne sont pas nécessairement situées au niveau de la seconde extrémité 12 longitudinale du corps, même si cela est plus pratique si l'on souhaite faciliter un remplissage complet de la cavité interne 16 de résine filtrante. Selon une mise en oeuvre particulière, la cartouche 8 comprend deux ouvertures 15 diamétralement opposées, ce qui permet à la fois de réaliser une fixation suffisante du couvercle 20 à la cartouche 8 et une fabrication simple du couvercle.

Selon un troisième aspect, l'invention concerne en outre un procédé 100 de remplissage d'un filtre 1' selon le deuxième aspect de l'invention. Le procédé 100 selon ce troisième aspect de l'invention comprend les étapes suivantes dans cet ordre :
110) fournir un filtre 1' selon le deuxième aspect de l'invention,
120) mettre le couvercle 20 dans la position de remplissage,
130) remplir la cavité interne 16 de la résine filtrante A' par l'intermédiaire des ouvertures 15 latérales, et
140) fermer la cartouche 8 au moyen du couvercle 20.

Le procédé 100 de remplissage selon le troisième aspect de l'invention permet de surmonter de nombreux inconvénients des procédés de remplissage connus de l'art antérieur. À l'issue de l'étape 130), comme le couvercle 20 est prépositionné sur la cartouche 8, il est possible de remplir la cavité intérieure de la résine filtrante A' sans qu'il ne soit nécessaire d'utiliser un quelconque élément de masquage contrairement aux procédés de l'art antérieur, par exemple ceux décrits dans le document JP-A-2021137771. La mise en oeuvre de ce procédé avec un filtre - tel que précédemment vu - qui comporte un couvercle 20 laissant ouvertes les ouvertures 15 latérales lorsqu'il est en position de remplissage et fermant lesdites ouvertures 15 latérales lorsqu'il est en position d'utilisation permet d'effectuer le remplissage simplement et avec un nombre de manipulations très réduit.

À ce propos et selon un exemple de réalisation illustré sur la figure 5a, le couvercle 20 comprend au moins un motif 30 de repérage de la position de remplissage et de la position d'utilisation, ce motif 30 étant agencé de sorte que, dans la position de remplissage, le motif est entièrement visible, et dans la position d'utilisation, le motif est partiellement visible. Cela permet à l'utilisateur de pouvoir évaluer rapidement la position du couvercle 20 par rapport à celle de la cartouche 8, ce qui peut être particulièrement utile lorsque plusieurs circuits de fluide 50 doivent faire l'objet d'une intervention. Dans le cas d'espèce, le motif indique « not filled » (« non rempli » en français). Il est intégralement visible en position de remplissage tandis qu'en position d'utilisation seul le mot « filled » (« rempli » en français) est visible. Il est donc possible d'identifier rapidement l'état de la cartouche 8, à savoir rempli/non rempli.

En outre, dans le cas où la plateforme 21 est reliée à un puits central 25 comportant les seconds orifices 27a, 27b, 27c, il est avantageux que ces seconds orifices soient recouverts d'un tamis qui permette de retenir la résine filtrante A' hors du puits central lors du chargement. De plus, il est également avantageux que la première extrémité 28 longitudinale du puits central soit dimensionnée de sorte à être déjà engagée dans la première extrémité 11 longitudinale du corps lorsque le couvercle 20 est en position d'utilisation. En effet, cela évite que la résine filtrante A' ne bloque la fermeture du couvercle. Aucun élément de masquage additionnel n'est nécessaire au niveau de la seconde extrémité 12 longitudinale du corps pour éviter que la résine A' ne pénètre dans le puits central 25, contrairement à ce qui avait été vu dans l'art antérieur.

Selon une mise en oeuvre particulière, la plateforme 21 comporte des premiers moyens 22 d'accroche à la cartouche 8 et la seconde extrémité 12 du corps comporte des seconds moyens 17 d'accroche à la plateforme 21. Les premiers 22 et seconds 17 moyens d'accroche sont libres lorsque le couvercle 20 est en position de remplissage tandis que les seconds moyens 17 d'accroche sont en prise avec les premiers moyens 22 d'accroche lorsque le couvercle 20 est en position d'utilisation. Ainsi, lors de l'étape 140, la cartouche 8 peut être fermée par le couvercle en faisant coopérer les seconds moyens 17 d'accroche et les premiers moyens 22 d'accroche de sorte à ce que les seconds moyens 22 d'accroche soient en prise avec les premiers moyens 17 d'accroche lorsque le couvercle 20 atteint la position d'utilisation.

De préférence, l'un des éléments choisis parmi les premiers moyens 22 d'accroche et les seconds moyens 17 d'accroche comprend des protubérances 22a, 22c, et l'autre de ces éléments comprend des encoches 17a, 17c. Les seconds moyens 17 d'accroche pourraient donc être situés sur le couvercle 20 tandis que les premiers moyens 22 d'accroche pourraient à l'inverse être situés sur la cartouche 8, notamment au niveau de la seconde extrémité 12 longitudinale du corps. Peu importe la configuration choisie, les protubérances 22a, 22c sont alors, de préférence, configurées pour coopérer par encliquetage élastique avec les encoches 17a, 17b pour assurer la fixation des éléments entre eux. En s'insérant dans les premières encoches 17a, les premières protubérances 22a permettent de verrouiller angulairement le couvercle 20 par rapport à la cartouche 8, ce qui est particulièrement avantageux lorsque le couvercle 20 est en position d'utilisation. Il en est de même lorsque les deuxièmes protubérances 22c s'insèrent dans les deuxièmes encoches 17c.

En outre, les premières protubérances 22a sont respectivement séparées des deuxièmes protubérance 22c par des espaces 22b, les moyens d'accroche 17 comprennent des pattes 17b aptes à s'insérer dans les espaces 22b de sorte à verrouiller longitudinalement le couvercle 20 par rapport au corps 10 lorsque le couvercle 20 est en position d'utilisation. La coopération des pattes 17b avec les espaces 22b permettent de fiabiliser encore plus la fixation du couvercle 20 sur la cartouche en empêchant le couvercle 20 d'effectuer des mouvements le long de l'axe longitudinal X une fois qu'il est fixé sur la cartouche. Autrement dit, la coopération des pattes 17b et des espaces 22b réalise un verrouillage longitudinal du couvercle 20 par rapport à la cartouche 8.

D'autres moyens pour fixer le couvercle 20 à la cartouche 8 peuvent être envisagés, toutefois les premiers moyens 22 d'accroche et les seconds 17 moyens d'accroche tels que ci-avant décrits permettent de fiabiliser la fixation du couvercle 20 à la cartouche 8 tout en permettant un démontage aisé du couvercle 20. En effet, le couvercle 20 peut être séparé de la cartouche 8 en exerçant une pression sur la deuxième protubérance 22c (enfoncée dans la deuxième encoche 17c, e.g. Fig. 5c) au-dessus d'un seuil prédéterminé. La contrainte ainsi générée sur le couvercle 20 déloge la patte 17b de l'espace 22b et la première protubérance 22a de la première encoche 17a.

Selon une mise en oeuvre particulière et comme cela peut être vu sur les figures, les premières encoches 17a s'étendent depuis un premier rebord 12a annulaire sur une surface interne du corps 10. Le fait que les premières encoches 17a soient proches du premier rebord annulaire 12a permet de réduire les contraintes exercées par le couvercle 20 sur la cartouche 8 lorsque ledit couvercle 20 passe de la position de remplissage à la position d'utilisation.

Selon une autre mise en oeuvre particulière, la plateforme 21 comprend un deuxième rebord 31 annulaire en saillie depuis une surface externe de la plateforme de sorte que dans la position de remplissage, ce deuxième rebord 31 annulaire est en butée sur le premier rebord 12a annulaire. Ainsi, lorsque le couvercle 20 atteint la position d'utilisation, il est à la fois retenu par les premiers 17 et seconds 22 moyens d'accroche mais aussi par le deuxième rebord annulaire 31. Ce dernier est également un moyen de verrouillage en translation du couvercle 20 par rapport à la cartouche 8. Il marque la position de fin de course du couvercle.

Les configurations montrées aux figures citées ne sont que des exemples possibles, nullement limitatifs, de l'invention qui englobe au contraire les variantes de conceptions à la portée de l'homme de l'art.

## Revendications

1. Déioniseur (1) pour un circuit (50) de fluide, le déioniseur (1) comprenant :
- une embase (2) de raccordement fluidique apte à être raccordée à un circuit de fluide, cette embase (2) comportant un port d'entrée (3) de fluide, un port de sortie (4) de fluide, et une interface (5) de fixation, et
- une cartouche (8) comportant un corps (10) et un couvercle (20), le corps (10) ayant une forme générale tubulaire le long d'un axe longitudinal (X), et comprenant une première extrémité (11) longitudinale fermée et une seconde extrémité (12) longitudinale qui est configurée pour être fixée à l'interface (5) de fixation de l'embase, le corps (10) comportant une cavité interne (16) de stockage apte à stocker une résine (A) échangeuse d'ions, le couvercle (20) étant destiné à être fixé à la seconde extrémité (12) longitudinale du corps et comportant une plateforme (21) reliée à un puits central (25),
la plateforme (21) s'étendant transversalement par rapport audit axe longitudinal (X) et fermant la seconde extrémité (12) du corps et ladite cavité interne (16), cette plateforme (21) comportant des premiers orifices (23) recouverts par un premier tamis ou comportant ce premier tamis (23a), les premiers orifices (23) étant configurés pour laisser passer un fluide (F) depuis ladite cavité interne (16) vers le port de sortie (4), et le premier tamis étant configuré pour retenir la résine et l'empêcher de sortir de la cavité interne (16), et
le puits central (25) s'étendant à l'intérieur du corps (10) et ayant une forme générale tubulaire le long de l'axe longitudinal (X), le puits central (25) comportant une première extrémité (28) longitudinale fermée située du côté de la première extrémité (11) longitudinale du corps, et une seconde extrémité (29) longitudinale qui est reliée à la plateforme (21) et qui est raccordée fluidiquement au port d'entrée (3), le puits central (25) comportant deux tronçons (25a, 25b) adjacents entre ses première (28) et seconde (29) extrémités longitudinales, un tronçon supérieur (25a) situé du côté de la première extrémité (28) et comportant des seconds orifices (27a, 27b, 27c) recouverts par un second tamis ou comportant ce second tamis, les seconds orifices (27a, 27b, 27c) étant configurés pour laisser passer le fluide (F) depuis le puits central (25) jusque dans la cavité interne (16), et le second tamis étant configuré pour retenir la résine (A) et l'empêcher de sortir de la cavité interne (16), et un tronçon inférieur (25b) qui est situé du côté de la seconde extrémité (29) et qui est dépourvu d'orifices.

2. Déioniseur (1) selon la revendication 1, dans lequel les seconds orifices (27a, 27b, 27c) ont des diamètres (d₁, d₂, d₃) croissants le long de l'axe longitudinal (X), les seconds orifices (27c) ayant les diamètres les plus élevés étant proximaux de la première extrémité (28) tandis que les seconds orifices (27a) ayant les diamètres les plus faibles étant distaux de la première extrémité (28).

3. Déioniseur (1) selon l'une quelconque des revendications 1 ou 2, dans lequel les seconds orifices (27a, 27b, 27c) présentent des dimensions, selon l'axe longitudinal (X), ne différant pas de plus de 10% par rapport aux dimensions, selon un axe transversal (Y), du puits central (25) et du port d'entrée (3).

4. Déioniseur (1) selon l'une quelconque des revendications précédentes, dans lequel les seconds orifices (27a, 27b, 27c) sont répartis angulairement sur une circonférence du puits central (25).

5. Déioniseur (1) selon l'une quelconque des revendications précédentes, dans lequel les dimensions longitudinales du tronçon inférieur (25b) sont au moins égales aux dimensions longitudinales du tronçon supérieur (25a).

6. Déioniseur (1) selon l'une quelconque des revendications précédentes, dans lequel les premiers orifices (23) sont distribués uniformément autour du puits central (25), lesdits premiers orifices ayant sensiblement le même diamètre ou la même dimension transversale.

7. Déioniseur (1) selon la revendication 5, dans lequel le puits central (25) comprend entre quatre et dix premiers orifices (23).

8. Déioniseur (1) selon l'une quelconque des revendications précédentes, dans lequel la plateforme (21) comprend une face supérieure (21a), de forme circulaire, délimitée par un pourtour périphérique (21b) s'étendant autour de l'axe longitudinal (X), ce pourtour périphérique (21b) présentant une forme cylindrique épousant un pourtour intérieur de la seconde extrémité (12) longitudinale de la cartouche, lesdits premiers orifices (23) étant formés dans la face supérieure (21a).

9. Déioniseur (1) selon l'une quelconque des revendications précédentes, comprenant en outre une cavité d'évacuation (24) formée par la plateforme (21) et l'embase (2), ladite cavité d'évacuation (24) s'étendant autour du port d'entrée (3).

10. Déioniseur (1) selon l'une quelconque des revendications précédentes, dans lequel le port d'entrée (3) comprend un canal (7) de raccordement du port d'entrée (3) au puits central (25), le canal (7) de raccordement étant sensiblement droit et débouchant au niveau de la seconde extrémité (29) longitudinale du puits central.

11. Déioniseur (1) selon l'une quelconque des revendications précédentes, dans lequel l'embase (2) comprend une vanne (6) multivoie de raccordement du déioniseur (1) au circuit (50) de fluide.

12. Déioniseur (1) selon l'une quelconque des revendications précédentes, dans lequel le corps (10) comprend un dôme (13), situé au niveau de sa première extrémité (11), ce dôme étant configuré pour recevoir la première extrémité (28) du puits central, le corps (10) comprenant en outre un trou de purge d'air (13a) et un bouchon (13b) configuré pour être fixé au trou (13a) de purge d'air, le trou de purge d'air et le bouchon (13) étant situés à un sommet du dôme.

13. Déioniseur (1) selon l'une quelconque des revendications précédentes, dans lequel la seconde extrémité (12) du corps comprend des premiers moyens (14) de fixation, et dans lequel, l'interface (5) de fixation comprend des seconds moyens (5a) de fixation complémentaires des premiers moyens (14) de fixation et aptes à coopérer avec lesdits premiers moyens (14) de fixation.

14. Déioniseur (1) selon l'une quelconque des revendications précédentes, dans lequel la plateforme (21) comprend des premiers moyens (22) d'accroche à la cartouche (8), et la seconde extrémité (12) du corps comprend des ouvertures (15) de chargement de la résine (A) échangeuse d'ions et des seconds moyens (17) d'accroche à la plateforme (21), le couvercle (20) étant configuré pour se déplacer entre une position de remplissage, dans laquelle les moyens (17) d'accroche sont libres et les ouvertures (15) sont ouvertes de sorte à donner accès à la cavité interne (16) pour le remplissage, et une position d'utilisation, dans laquelle les seconds moyens (17) d'accroche sont en prise avec les premiers moyens (22) d'accroche et les ouvertures (15) sont fermées par la plateforme (21), par translation d'axe longitudinal (X).

15. Déioniseur (1) selon l'une quelconque des revendications précédentes, dans lequel la plateforme (21) et le puits central (25) sont formés d'une seule pièce.

16. Déioniseur (1) selon l'une quelconque des revendications 1 à 14, dans lequel la plateforme (21) et le puits central (25) sont des pièces distinctes.

17. Déioniseur (1) selon la revendication 4, dans lequel les seconds orifices (27a, 27b et 27c) forment des rangées annulaires de seconds orifices (27a, 27b et 27c) sur la circonférence du puits central (25), les seconds orifices (27a, 27b et 27c) d'une même rangée annulaire étant angulairement espacés d'un angle de 180°.

18. Circuit de fluide (50), en particulier pour un véhicule, comprenant un empilement (51) de piles à combustible, un échangeur de chaleur (54) et un déioniseur selon l'une quelconque des revendications précédentes.

19. Procédé (100) de remplissage d'un déioniseur (1), le procédé (100) comprenant les étapes suivantes dans cet ordre :
(110) fournir une cartouche (8) et un couvercle (20) d'un déioniseur selon la revendication 1,
(120) mettre le couvercle (20) dans une position de remplissage,
(130) remplir la cavité interne (16) de résine (A) échangeuse d'ions, et
(140) fermer la cartouche (8) au moyen du couvercle (20).
